# EUROPEAN PATENT APPLICATION

(11) **EP 1 560 053 A1**
(43) Date of publication of application: **03.08.2005**
(21) Application number: 03754191.9
(22) Date of filing: 20.10.2003
(51) Int. Cl.: G02B 7/04, G02B 7/08

(54) **LENS DRIVER**

(30) Priority: 21.10.2002 JP 2002306420; 24.02.2003 JP 2003046010
(71) Applicant: FDK Corporation, Minato-ku, Tokyo 105-0004 (JP)
(72) Inventor: Watanabe, Kazuyuki, FDK Corporation, Minato-ku, Tokyo 105-0004 (JP); Komura, Haruhiro, FDK Corporation, Minato-ku, Tokyo 105-0004 (JP); Yamauchi, Shinya, FDK Corporation, Minato-ku, Tokyo 105-0004 (JP); Yamamoto, Tetsutaka, FDK Corporation, Minato-ku, Tokyo 105-0004 (JP); Sueyoshi, Nobuyuki, FDK Corporation, Minato-ku, Tokyo 105-0004 (JP); Kazimoto, Masatoshi, FDK Corporation, Minato-ku, Tokyo 105-0004 (JP)
(74) Representative: Kilian, Helmut, Dr.
(86) International application number: PCT/JP2003/013369
(87) International publication number: WO 2004/036281

(57) **Abstract**

A front lens group 1 and a rear lens group 2 having a diameter of about 5 mm are held inside a cylindrical body 5 so as to be capable of movement in the forward and backward directions via a front group movable body 3 and a rear group movable body 4, respectively. An image taking element such as a CCD or the like is arranged at a prescribed position behind the cylindrical body, and by appropriately setting the distance from each lens group to the CCD and the distance between both lens groups, it is possible to form an image at a prescribed zoom on the CCD. Specifically, from the 1x base state shown in Fig. 1(a), at the time when the zoom magnification is made αx → βx → γx, the positional relationship between the front lens group and the rear lens group becomes as shown in Fig. 1(b) ~ (d). Accordingly, it is possible to switch between the two kinds of zoom magnification 1x and βx by fixing the front lens group and moving only the rear lens group back and forth between the positions (1) and (3), for example.

## Description

### TECHNICAL FIELD

The present invention is related to a lens drive apparatus which makes lenses movable to carry out optical zoom and focusing, and to a lens drive apparatus which can move lenses to carry out the operations of optical zoom, macro and focus, and in particular to an improvement of drive operations in a simplified lens structure which can be applied to ultraminiature cameras.

### PRIOR ART TECHNOLOGY

In recent years, portable telephones equipped with ultraminiature cameras have become widespread. Such ultraminiature cameras generally use a fixed focal point due to size restrictions. The presence or absence of such ultraminiature cameras holds a big weight in the selection of phone types when a portable telephone is purchased. Further, whether or not a portable telephone is equipped with an ultraminiature camera is a big point in the mind of a user, but in actuality not very much concern is given to the performance and function of the ultraminiature camera.

However, as portable telephones equipped with existing fixed focal point type ultraminiature cameras have become widespread, the user who has been using such portable telephones after a normal period of use will naturally want higher functions in order to be distinguished from other people and the like. One example of a higher function is an optical zoom function used in a still camera or a video camera or the like.

In such optical zoom function, a desired zoom is obtained and focusing is carried out in accordance with that zoom normally by appropriately moving two or more lens groups in the optical axis direction. Further, as a specific structure for carrying out such process, as shown in Japanese Laid-Open Patent Application No. HEI 7-336938 (Patent Document 1), for example, two lenses are respectively moved by independent actuators (stepping motors). Further, as another method, as shown in Japanese Laid-Open Patent Application No. HEI 11-52209 (Patent Document 2), by using a cam for one actuator or motor, the positional relationship of two lenses (lens groups) is controlled, and this achieves the two operations of zoom and focus.

The movement of the lenses for achieving optical zoom is complex, and instead of just movement in one direction, a non-linear curve that includes a round trip is drawn. In particular, in order to be installed in a portable telephone, the optically effective lens diameter (hereafter "lens diameter") needs to be less than or equal to φ 7 mm, and should preferably be less than or equal to φ 5 mm, and in the case where an ultraminiature lens is used in that way, the position accuracy of the lenses becomes strict, and this requires highly accurate positioning and a high level of control.

For this reason, in addition to a drive circuit for operating an actuator, there is a need for a circuit which processes data from images and sensors for measuring the distance to objects and confirming positions and the like, and supplies feedback to the drive circuit. In other words, this requires highly accurate sensors and data processing, portions requiring control, development, and design man-hours. Furthermore, there is a high cost accompanying an increase in the number of components, the power consumption becomes larger, and the size becomes large scale, whereby it becomes difficult to install in portable telephones and the like. In particular, as described in Patent Document 1, in the case where a drive system is provided for each lens, the problems described above become more pronounced.

On the other hand, in the case where a cam is used as in the invention disclosed in Patent Document 2, this is feasible with one actuator, but a cam and a guide having a plurality of different curvatures are required in order to carry out nonlinear movement. For this reason, the movement and the mechanical mechanism are also complex. Furthermore, because the movement of the lenses is very different from the camera method, the cam must be developed and designed to such extent.

Further, as shown in Japanese Laid-Open Patent Application No. 2002-290523 (Patent Document 3), a drive apparatus equipped with a zoom function for installation in a portable telephone achieves zoom by using a cam for one actuator (motor) to control the positional relationship of two longitudinal lenses (group lenses). However, the invention disclosed in the publication described above is a double cylinder cam mechanism in which a fixed cylinder for a slot of a linear guide is arranged around the lenses, and a cam cylinder which transmits a driving force is arranged on the outside thereof, and because these are housed in a cylindrical housing, there is the problem of the external size becoming big.

Further, in order to achieve macro operations, a desired macro-focus is obtained by appropriately moving the two longitudinal group lenses in the optical axis direction, and in this case because the relative positional relationship of the longitudinal group lenses and the image taking element is different from the zoom function, in order to make these compatible, each group lens needs to be moved independently. However, when a structure is formed in which each group lens is independently moved by two actuators, the body becomes large, and this makes it difficult to carry out ultraminiaturization. Further, when zoom and macro operations are obtained using a cam mechanism, the structure thereof becomes complex, and this makes it difficult to carry out ultraminiaturization.

In view of the background described above, it is an object of the present invention to solve the problems described above without the need for a complex cam mechanism or highly accurate control or complex mechanisms, and provide a simple miniature lens drive apparatus at low cost by limiting the zoom magnification. Further, it is another object to provide a lens drive apparatus having an ultraminiature external size which makes it possible to carry out the operations of optical zoom, macro and focus by one actuator in order to be preferably installed in portable telephones and the like to achieve thinner and smaller scale devices.

### SUMMARY OF THE INVENTION

In order to achieve the objects stated above, the lens drive apparatus according to the present invention is a lens drive apparatus for moving lenses in a lens unit having an optical zoom function for use in an ultraminiature camera which uses lenses having a lens diameter of 7 mm or less, and is equipped with first and second lens support members arranged in the front and back, wherein each of said first and second lens members holds a prescribed number of lenses. Further, in such proposed structure, said first lens support member is fixed, and said second lens support member is made movable in the forward and backward directions and is constructed so as to stop at two prescribed positions in the forward and backward directions, and this makes it possible to switch between two kinds of zoom magnification.

Further, as another solution means, in the proposed structure described above, said first lens support member is made movable in the forward and backward directions and is constructed so as to stop at two prescribed positions in the forward and backward directions, and said second lens support member is made movable in the forward and backward directions and is constructed so as to stop at two prescribed positions in the forward and backward directions, and this makes it possible to switch between two kinds of zoom magnification by controlling the stopping positions of said first and second lens support members.

In this case, preferably at least one solenoid, relay or permanent magnet is used as an actuator to move said first lens support member and said second lens support member, and this makes it possible to control the switching of the two kinds of relative positional relationship by moving the first and second lens support members in accordance with the output of the actuator. When this structure is formed, the switching control can be achieved by a simpler structure.

Further, as another solution means, in the proposed structure described above, said first lens support member is made movable in the forward and backward directions and is constructed so as to stop at two prescribed positions in the forward and backward directions, and said second lens support member is made movable in the forward and backward directions and is constructed so as to stop at three prescribed positions in the forward and backward directions, and this makes it possible to switch between three kinds of zoom magnification by controlling the stopping positions of said first and second lens support members.

In this case, when said second lens support member receives the output of a stepping motor to move forward and backward, and said first lens support member is made movable by a biasing force from said second lens support member and is stopped at the two positions of a first position in the state when said biasing force is not received, and a second position when being moved by said biasing force, it is possible to switch between three kinds of zoom magnification by one actuator and a simple power transmission mechanism. This invention is achieved by the thirteenth embodiment, for example.

Furthermore, in each of the inventions described above, the movement of at least one of said first lens support member and said second lens support member can be carried out based on the output of a stepping motor.

In this regard, in the embodiments, the first lens support member corresponds to the member (front group support body 40, front group movable body 3, 40', front lens support body 53, front lens group 61, 71 and the like) which supports the front lens group, and the second lens support member corresponds to the member (rear group movable body 4, 30, rear lens support body 54, rear lens group 62, 72 and the like) which supports the rear lens group, but the present invention is not limited to this, and depending on the operational characteristics which show the relative relationship between the zoom magnification and the lens position, the reverse application may also be obtained.

In the present invention, the stopping positions were limited to 2 or 3 positions. In this way, positioning can be carried out easily using a simple miniature structure, and by properly setting the stopping positions in accordance with the operational characteristics, it is possible to exhibit different zoom magnifications.

Further, because the number of stopping positions is limited in this way, even in the case where a plurality of stepping motors are used as actuators, for example, because the positioning of each lens support member can be carried out by abutment positioning, it is possible to carry out highly accurate positioning by simple control. Accordingly, the size of the apparatus does not become larger. Further, these merits may be obtained by driving one side with a stepping motor, by attracting/repelling one side with a relay, a solenoid or a permanent magnet, or by manual operation driving.

Further, using one of any of these as an actuator, by appropriately transmitting the output thereof to each of the lens support members, it is possible to obtain different relative positional relationships, and this makes it possible to change the zoom magnification.

Furthermore, even when the first lens support member is fixed, because it is possible to obtain two kinds of zoom magnification by appropriately setting the stopping positions of the second lens support member, the present invention can be achieved by an extremely simple miniature mechanism.

Further, the applied lens diameter is made 7 mm or less for the reason given below. Namely, in ultraminiature cameras used in portable telephones and the like, the surface area of the camera module forms a size less than or equal to 13 mm square even for fixed focusing, and this level is used as an upper limit. In this regard, in order to fix the lens, a fixed frame of at least about 1 mm needs to be provided, and the size of the lens module becomes "lens diameter + 2 mm". Further, because an actuator and a slide mechanism are provided on the outside of such lens module, in order to make the total size 13mm or less, the lens diameter needs to be made less than or equal to φ 7 mm. Of course, when considering a certain degree of margin and further miniaturization of the devices into which the camera will be mounted such as portable telephones and the like, φ 7 mm is the upper limit, and the diameter is preferably less than or equal to φ 5 mm. Of course, the application object of the lens drive apparatus of the present invention is not limited to portable telephones.

In order to achieve the other objects described above, the lens drive apparatus according to the present invention is a lens drive apparatus for moving lenses in a lens unit having an optical zoom function for use in an ultraminiature camera which uses lenses having a lens diameter of 7 mm or less, and is equipped with first and second lens support members arranged in the front and back, wherein each of said first and second lens members holds a prescribed number of lenses. Further, said first lens support member is fixed, and said second lens support member is made movable in the forward and backward directions, is constructed so as to stop at two fixed positions in the forward and backward directions, and is driven to move a minute distance at said fixed positions, whereby it is possible to carry out operations which change optical zoom and focus.

In this regard, in the embodiments, the first lens support member corresponds to the member (frame 3, front group support body 40) which supports the front lens group, and the second lens support member corresponds to the member (frame 4, rear group movable body 30) which supports the rear lens group, but the present invention is not limited to this, and depending on the operational characteristics which show the relative relationship between the zoom magnification and the lens position, the reverse application may also be obtained.

In the present invention, the stopping positions were limited to 2 fixed positions, wherein such fixed positions form base positions where minute distance movement is carried out. In this way, positioning can be carried out easily using a simple miniature structure, and by properly setting the stopping positions in accordance with the operational characteristics, it is possible to exhibit different zoom magnifications. For this reason, a zoom operation having two values is carried out even in a structure where only the one second lens support member is driven.

Further, because the rear lens is moved minutely at each fixed position, focusing is possible, and this makes it possible to carry out a focus operation. Further, from the fact that there is movement over a minute distance, the zoom focal point is moved out of place soon, and focusing takes place at a focal point existing at a very close position, whereby macro operations are carried out.

Further, as confirmed by experiment, if the minute movement at said fixed positions carries out movement by a feed pitch less than or equal to 50 µm for at least a 500 µm section front and back, it is possible to easily use the macro focal point existing at a very close position. Further, when the feed pitch of said minute movement is made less than or equal to several µm, the focus operation becomes easy.

Further, a stepping motor is used as a drive source in said drive means, a lead screw is provided on the output shaft of the stepping motor, a lead nut is provided at a corresponding position of said second lens support member, and a linear operation is carried out by connecting the lead screw and the lead nut. In this case, from the fact that a stepping motor is used, driving can be carried out over an open loop, the structure becomes simple without the need for a position detection sensor or the like, and the drive control becomes easy.

Further, said stepping motor is a flat type in which steps are arranged on the left and right of the rotor. In this case, because the drive source becomes flat, the thickness of the lens drive apparatus can be greatly reduced, and this is advantageous in view of ultraminiaturization.

### BRIEF DESCRIPTION OF THE DRAWINGS

Fig. 1 is a rough structural drawing for explaining the concept of each embodiment of the present invention.
Fig. 2 is an operational characteristics graph showing the positional relationship between the zoom magnification and the lens groups.
Fig. 3 is an operational characteristics graph (1 thereof) showing the positional relationship between the zoom magnification and the lens groups for explaining the operation principle of the present invention.
Fig. 4 is an operational characteristics graph (2 thereof) showing the positional relationship between the zoom magnification and the lens groups for explaining the operation principle of the present invention.
Fig. 5 is an operational characteristics graph (3 thereof) showing the positional relationship between the zoom magnification and the lens groups for explaining the operation principle of the present invention.
Fig. 6 is an operational characteristics graph (4 thereof) showing the positional relationship between the zoom magnification and the lens groups for explaining the operation principle of the present invention.
Fig. 7 is an operational characteristics graph (5 thereof) showing the positional relationship between the zoom magnification and the lens groups for explaining the operation principle of the present invention.
Fig. 8 is an exploded perspective drawing showing a first embodiment of the present invention.
Fig. 9 is a perspective drawing showing a first embodiment of the present invention.
Fig. 10 is a cross-sectional drawing showing a second embodiment of the present invention.
Fig. 11 is a cross-sectional drawing showing a third embodiment of the present invention.
Fig. 12 is a cross-sectional drawing showing a fourth embodiment of the present invention.
Fig. 13 is a cross-sectional drawing showing a fifth embodiment of the present invention.
Fig. 14 is a cross-sectional drawing showing a sixth embodiment of the present invention.
Fig. 15 is a drawing showing a modification of a coil.
Fig. 16 is a cross-sectional drawing showing a seventh embodiment of the present invention.
Fig. 17 is a cross-sectional drawing showing a seventh embodiment of the present invention.
Fig. 18 is a cross-sectional drawing showing an eighth embodiment of the present invention.
Fig. 19 is a cross-sectional drawing showing a ninth embodiment of the present invention.
Fig. 20 is a cross-sectional drawing showing a tenth embodiment of the present invention.
Fig. 21 is a cross-sectional drawing showing an eleventh embodiment of the present invention.
Fig. 22 is a drawing showing a twelfth embodiment of the present invention.
Fig. 23 is a drawing showing a modification of the twelfth embodiment of the present invention.
Fig: 24 is a drawing showing a modification of the twelfth embodiment of the present invention.
Fig. 25 is a drawing showing a modification of the twelfth embodiment of the present invention.
Fig. 26 is a drawing showing a modification of the twelfth embodiment of the present invention.
Fig. 27 is a drawing showing a modification of the twelfth embodiment of the present invention.
Fig. 28 is a drawing showing a modification of the twelfth embodiment of the present invention.
Fig. 29 is a drawing showing a modification of the twelfth embodiment of the present invention.
Fig. 30 is a drawing showing a modification of the twelfth embodiment of the present invention.
Fig. 31 is a drawing for describing one example of a drive mechanism of a movable member in the twelfth embodiment of the present invention.
Fig. 32 is a drawing for describing one example of a drive mechanism of a movable member in the twelfth embodiment of the present invention.
Fig. 33 is a drawing for describing one example of a drive mechanism of a movable member in the twelfth embodiment of the present invention.
Fig. 34 is a drawing for describing one example of a drive mechanism of a movable member in the twelfth embodiment of the present invention.
Fig. 35 is a drawing for describing one example of a drive mechanism of a movable member in the twelfth embodiment of the present invention.
Fig. 36 is a drawing showing a thirteenth embodiment of the present invention.
Fig. 37 is a drawing showing a thirteenth embodiment of the present invention.
Fig. 38 is a drawing showing a thirteenth embodiment of the present invention.
Fig. 39 is a side view for explaining the concept in a fourteenth embodiment of the present invention.
Fig. 40 is a characteristics graph showing the lens positions for zoom magnification in a fourteenth embodiment of the present invention.
Fig. 41 is a characteristics graph showing the lens positions forming the macro operation in a fourteenth embodiment of the present invention.

### PREFERRED EMBODIMENTS OF THE INVENTION

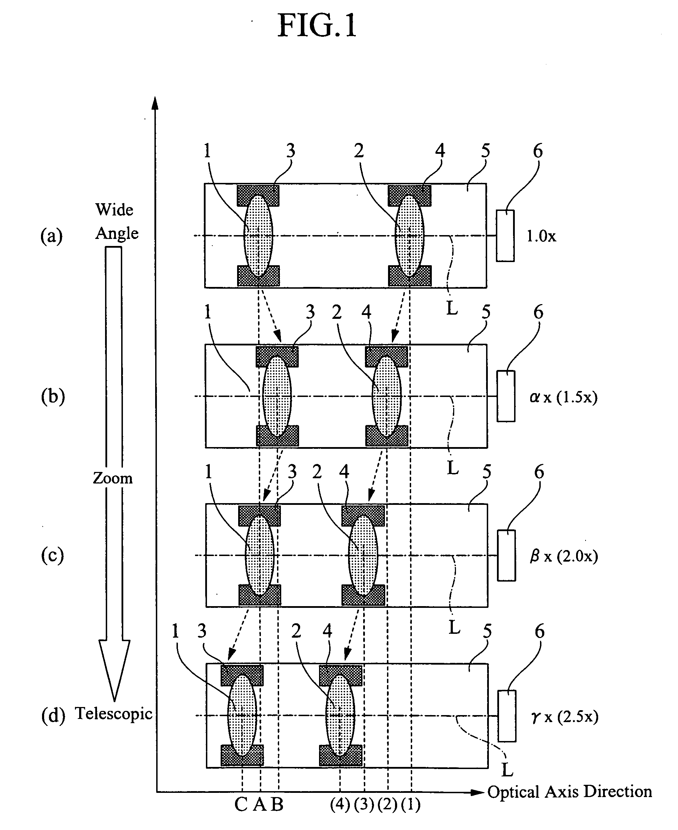

The present invention will be described in greater detail with reference to the appended drawings. Fig. 1 is a drawing which explains the concept of a preferred embodiment of the present invention. As shown in Fig. 1(a), in a lens drive apparatus for an ultraminiature camera, a front lens group 1 and a rear lens group 2 are arranged along an optical axis L. The front lens group 1 and the rear lens group 2 have a diameter of 5 mm and are held inside a cylindrical body 5 via a front group movable body 3 and a rear group movable body 4, respectively. In the example of the drawing, because these are movable bodies, the front lens group 1 and the rear lens group 2 can both move in the forward and backward directions inside the cylindrical body 5. Of course, for convenience sake in the drawing, an example is shown in which the front lens group 1 and the rear lens group 2 are inserted and arranged inside the cylindrical body 5, but in accordance with the driving mechanism of the front group movable body 3 and the rear group movable body 4, it does not need to be a cylindrical body, and it goes without saying that any appropriate structure may be used.

Further, in order to construct an ultraminiature camera, an image taking element 6 such as a CCD or the like is arranged at a prescribed rear position of the cylindrical body 5. In this way, by appropriately setting the distance to each of the lens groups 1, 2 and the image taking element 6 such as a CCD or the like and the distance between both lens groups 1, 2, it is possible to form an image at a prescribed zoom magnification. Of course, the output of the image taking element 6 such as a CCD or the like is inputted into a prescribed image processing apparatus, but because the body structure of the ultraminiature camera has no relationship with the present invention, a description thereof is omitted. Further, Fig. 1(a) shows the state in which the zoom magnification is 1x.

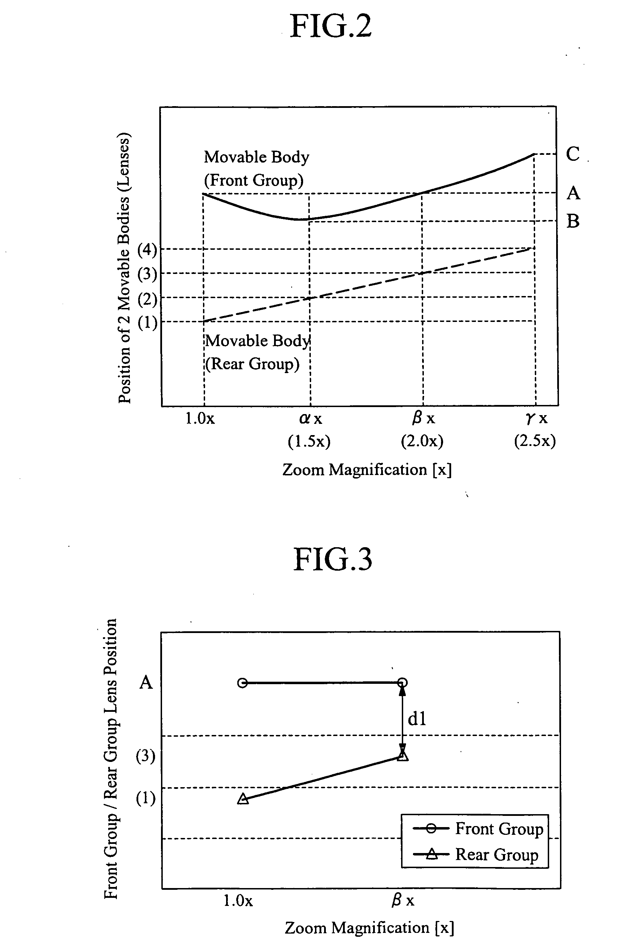

In the description given below, the relationship of the positions of the two lens groups 1, 2 and the zoom magnification (in focus) is like that shown in Fig. 2. Namely, as shown by the solid line, the movement path of the front lens group 1 is moved backward so that the zoom magnification is from 1x to αx (e.g., 1.5x), and then when moved forward slowly, the zoom magnification is increased βx (e.g., 2x) → γx (e.g., 2.5x). At this time, as shown by the broken line, the movement path of the rear lens group 2 is moved forward slowly in order to increase the zoom magnification from 1x.

Further, from the state of the base 1x shown in Fig. 1(a), the positional relationships of the front lens group 1 and the rear lens group 2 at the times when the zoom magnification is αx, βx and γx are shown in Figs. 1(b) through (d). Further, the characteristic graph shown in Fig. 2 shows various changes in accordance with the used lens and other mechanisms.

In this regard, in the present invention, it was observed that the movement path of the front lens group 1 for a zoom magnification from 1x to γx moves forward after first moving backward temporarily. Namely, when viewing the position of the front lens group 1, if A forms the position at the time when the zoom magnification is the base 1x, then the position is the same A when the zoom magnification is βx. Accordingly, if the front lens group 1 is fixed (the front group movable body 3 is made a simple holding member), and the rear lens group 2 is made to move freely in a round trip stopping at the two positions (Figs. 1(a), (c)) of the base position (1) and the position (3), it is possible to achieve a lens drive apparatus in which the zoom magnification has the two kinds of magnification 1x and βx. The operation characteristics (zoom magnification and lens position relationship) in this case are shown in Fig. 3.

Further, such structure is achieved by one drive mechanism for the rear lens group 2. Furthermore, because there is a round trip movement between the two positions (1), (2), a miniature drive mechanism can be achieved easily by a stepping motor of course, or by a solenoid, a relay, a magnet or the like, and this makes it possible to carry out further miniaturization.

Further, when the front lens group 1 and the rear lens group 2 are each made independently movable in a round trip between two prescribed positions, it is possible to achieve a lens drive apparatus for an ultraminiature camera which obtains a plurality of zoom magnifications as described below.

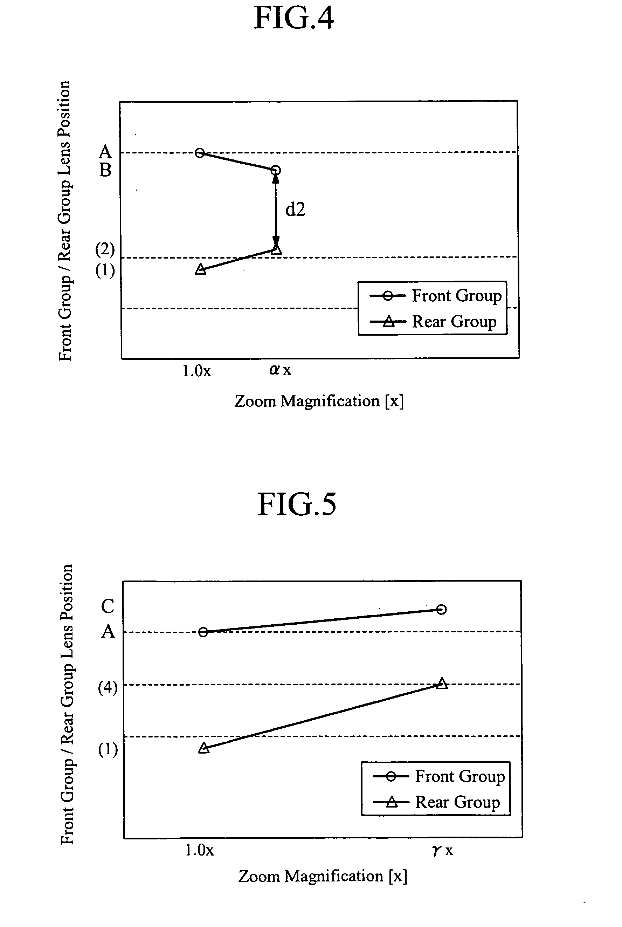

Namely, the front lens group 1 is moved in a round trip to stop at the two positions of the base position A and the rear position B, and the rear lens group 2 is moved in a round trip to stop at the base position (1) and the front position (2). In this way, by carrying out control like the operation characteristics shown in Fig. 4, it is possible to achieve a lens drive apparatus which obtains the two zoom magnifications of the zoom magnification 1x of the base position (Fig. 1(a)) and the zoom magnification αx (Fig. 1(b)). In this example, mechanisms for driving each of the front lens group 1 and the rear lens group 2 are required, but because movement in a round trip is made only between two positions, each drive mechanism can be simplified, control can also be simplified, and miniaturization is achieved, whereby it becomes possible for such structure to be used adequately as a lens drive apparatus for an ultraminiature camera.

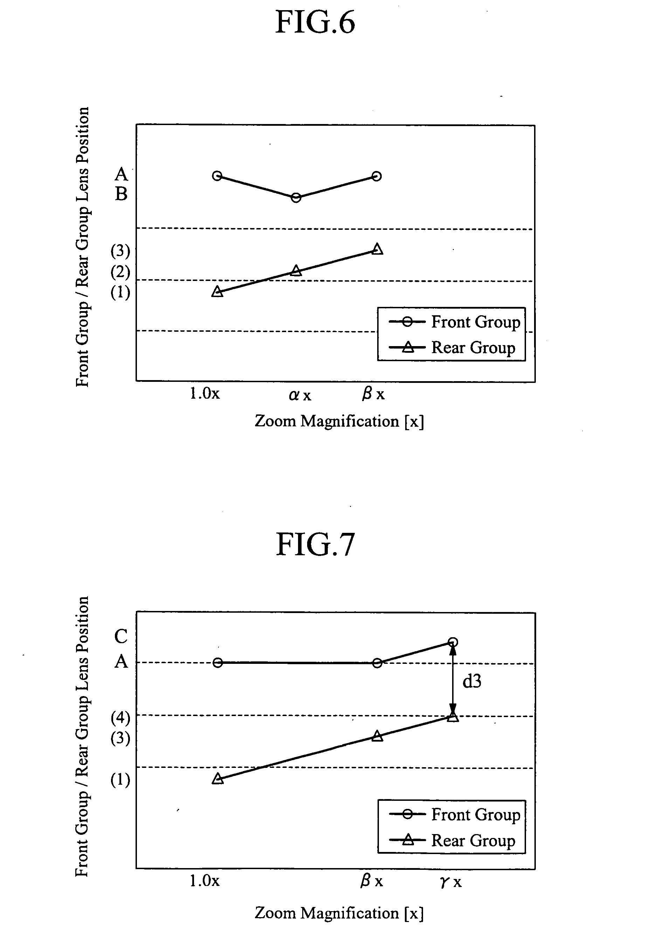

In the same way, the front lens group 1 is moved in a round trip to stop at the two positions of the base position A and the front position C, and the rear lens group 2 is moved in a round trip to stop at the base position (1) and the front-most position (4). In this way, by carrying out control like the operation characteristics shown in Fig. 5, it is possible to achieve a lens drive apparatus which obtains the two kinds of zoom magnification of the base position (Fig. 1(a)) and the zoom magnification γx (Fig. 1(d)). In this example, mechanisms for driving each of the front lens group 1 and the rear lens group 2 are required, but because movement in a round trip is made only between two positions, each drive mechanism can be simplified, control can also be simplified, and miniaturization is achieved, whereby it becomes possible for such structure to be used adequately as a lens drive apparatus for an ultraminiature camera.

Further, the front lens group 1 is moved in a round trip to stop at the two positions of the base position A and the rear position B, and the rear lens group 2 is moved in a round trip to stop at the base position (1) and the two front positions (2), (3) for a total of three positions. In this way, by carrying out control like the operation characteristics shown in Fig. 6, it is possible to achieve a lens drive apparatus which obtains the three kinds of zoom magnification of the zoom magnification 1x of the base position (Fig. 1(a)), the zoom magnification αx (Fig. 1(b)) and the zoom magnification βx (Fig. 1(c)).

Further, the front lens group 1 is moved in a round trip to stop at the two positions of the base position A and the rear position B, and the rear lens group 2 is moved in a round trip to stop at the base position (1) and the two front positions (2), (3) for a total of three positions. In this way, by carrying out control like the operation characteristics shown in Fig. 7, it is possible to achieve a lens drive apparatus which obtains the three kinds of zoom magnification of the zoom magnification 1x of the base position (Fig. 1(a)), the zoom magnification βx (Fig. 1(b)) and the zoom magnification γx (Fig. 1(c)).

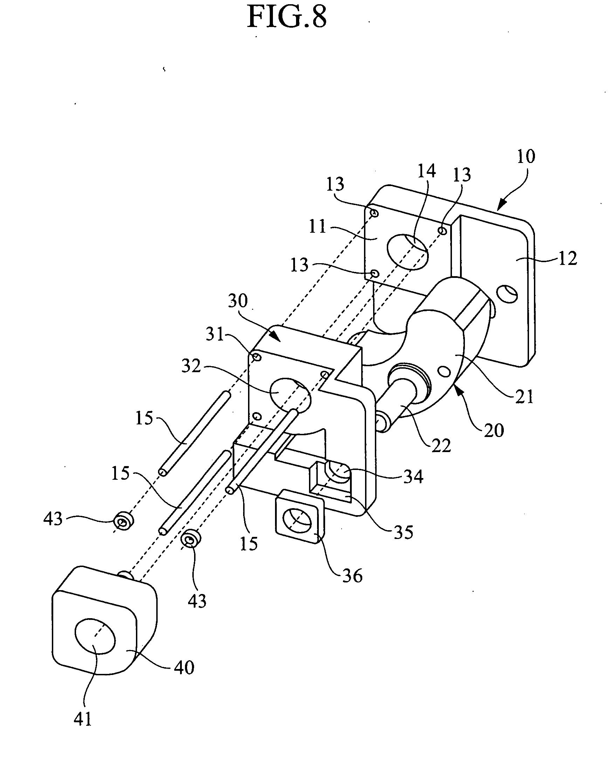

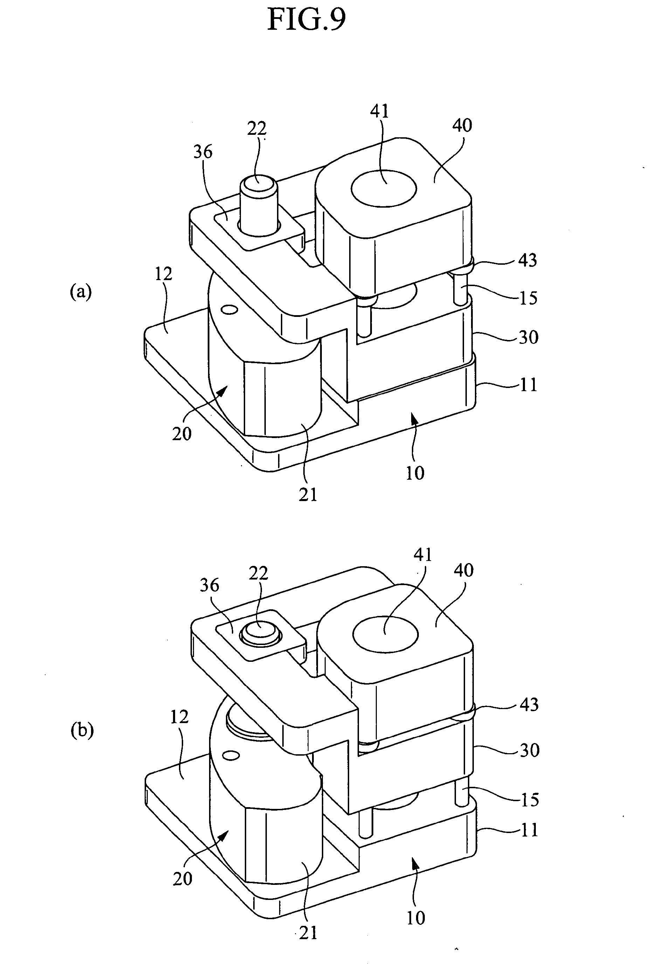

Next, a more concrete structure for achieving the above-described operating principle will be described. Fig. 8 and Fig. 9 show a first embodiment. This first embodiment is a type in which the front lens group is fixed, and a motor is used as an actuator. Fig. 8 is an exploded perspective drawing, Fig. 9(a) is a perspective drawing showing a base posture (zoom magnification 1x), and Fig. 9(b) is a perspective drawing showing a state in which the zoom magnification is βx (2x).

As shown in Fig. 8, a flat rectangular base 10 is formed from a high step portion 11 which raises ¼ of the area of the front surface thereof including one corner by one step, and a low step portion 12 on the remaining area. Further, small diameter holes 13 are formed in three of the four corners of the high step portion 11, and a large diameter through hole 14 is formed in the middle. The center of the through hole 14 forms the optical axis, and although omitted from the drawings, an image taking element such as a CCD or the like is arranged at a prescribed position behind the through hole 14.

Further, a miniature stepping motor 20 is provided on top of the low step portion 12. The stepping motor 20 has a case body 21 which is curved in the shape of a rough arc along the flat shape of the low step portion 12, and an output shaft 22 which protrudes to the outside is provided in the middle portion thereof. Although omitted from the drawings, a rotor is arranged in the middle inside the case body 21, and the output shaft 22 is inserted in the center of the rotor to form an integrated body. Further, a stator is arranged in both side portions extending left and right inside the case body 21. In this regard, the structure disclosed in Japanese Laid-Open Patent Application No. HEI 6-1055828 or Japanese Laid-Open Patent Application No. HEI 6-296358 can be used as a stepping motor having such structure. Of course, the stepping motor is not limited to such structures, and it goes without saying that it is possible to use various structures. Further, a screw thread is cut in the tip portion of the output shaft 22 to form a lead screw.

On the other hand, one end of a guide pin 15 is inserted and fixed inside each of the holes 13 provided in the high step portion 11. Further, insertion is carried out so that a rear group movable body 30 can move with respect to the guide pins 15. The rear group movable body 30 has a flat shape roughly the same as that of the base 10, has guide holes 31 which pass through at positions corresponding to the holes 13 of the base 10, and is provided with a through hole 32 at a position corresponding to the through hole 14 of the base 10. Further, the guide pins 15 are inserted and arranged inside the guide holes 31, and in this way, the rear group movable body 30 which is supported by the three guide pins 15 can move forward and backward along the guide pins 15 in a stable posture. Further, a rear lens group (which includes the case of one lens) omitted from the drawings is mounted inside the through hole 32. Accordingly, the rear lens group moves forward and backward following the forward and backward movement of the rear group movable body 30. Further, in the state where the rear group movable body 30 is mounted on the guide pins 15, the stepping motor 20 is in an inserted state between the base 10 and the rear group movable body 30.

Further, a through hole 34 is formed in the portion of the rear group movable body 30 corresponding to the output shaft 22 of the stepping motor 20, and a rectangular concave portion 35 is formed around the through hole 34 in the front side of the rear group movable body 30. Further, a lead nut 36 is inserted and fixed inside the concave portion 35. The lead nut 36 engages with the lead screw provided on the output shaft 22 of the stepping motor 20, whereby the lead nut 36 and the rear group movable body 30 move forward and backward following the positive and reverse rotations of the output shaft 22.

Further, a front group support body 40 which supports the front lens group is mounted to the tip of each guide pin 15. Because the front group support body 40 is fixed to the tip of each guide pin 15, the relative positional relationship with the base 10 and the relative positional relationship with the CCD do not change. Further, a through hole 41 is provided in the middle portion of the front group support body 40, namely, at a position corresponding to the through holes 14, 32 provided in the base 10 and the rear group movable body 30, and the front lens group is inserted and arranged inside the through hole 41.

Further, a spacer 41 is arranged on each guide pin 15 by insertion. The thickness of the spacers 43 is set so that the distance between the front lens group and the rear lens group in the state where the front group support body 40 and the rear group movable body 30 are touching via the spacers 43 matches the spacing d1 (see Fig. 3) between the base position A of the front lens group and the front position (3) of the rear lens group. Furthermore, in the state where the output shaft 22 of the stepping motor 20 is rotated in reverse to move the rear group movable body 30 the farthest back, the rear lens group is adjusted so as to be positioned at the base position (1). Further, the length of the guide pins 15 are adjusted so that the position of the front lens group forms the base position A.

As one example of the dimensional shape of the lens drive apparatus having the structure described above, the base 10 forms an 11 mm square. Further, the inner diameter of the through holes 32, 41, namely, the diameter of the rear lens group and the front lens group is 5 mm. Further, the total height of the apparatus (the distance from the bottom surface of the base 10 to the front surface of the front group support body 40) is approximately 11 mm. In this way, the apparatus can be adequately installed in a portable telephone.

Further, when considering the dimensional shape of existing portable telephones, the surface area of the camera module forms a size less than or equal to 13 mm square even for fixed focusing. When this level is used as an upper limit, the lens drive apparatus can be made one size larger with a lens diameter up to about 7 mm, and this makes it possible to keep the total size (flat shape of the base 10) under 13 mm square. Of course, the use of a smaller lens does not interfere with the design of further overall miniaturization.

By forming such structure, when the output shaft 22 of the stepping motor 20 is rotated in reverse to move the rear group movable body 30 backward to a base posture in contact with the front surface of the base 10 as shown in Fig. 9(a), the zoom magnification can be set at 1x.

From this state, when the output shaft 22 of the stepping motor 20 is rotated in the positive direction to move the rear group movable body 30 forward to form a state in which the front surface of the rear group movable body 30 is in contact with the spacers 43 as shown in Fig. 9(b), the zoom magnification can be set at βx (e.g., 2x).

Further, because the stepping motor 20 is used as an actuator, by controlling the number of steps, it is possible to control the position of the rear group movable body 30 with good accuracy, and in the present embodiment, the rear group movable body 30 may be stopped at the two positions of the position where contact is made with the base 10, and the position where contact is made with the spacers 43, and because there is contact with another member at either stopping position, positioning can be carried out accurately even by relatively rough control of the number of rotations (number of steps).

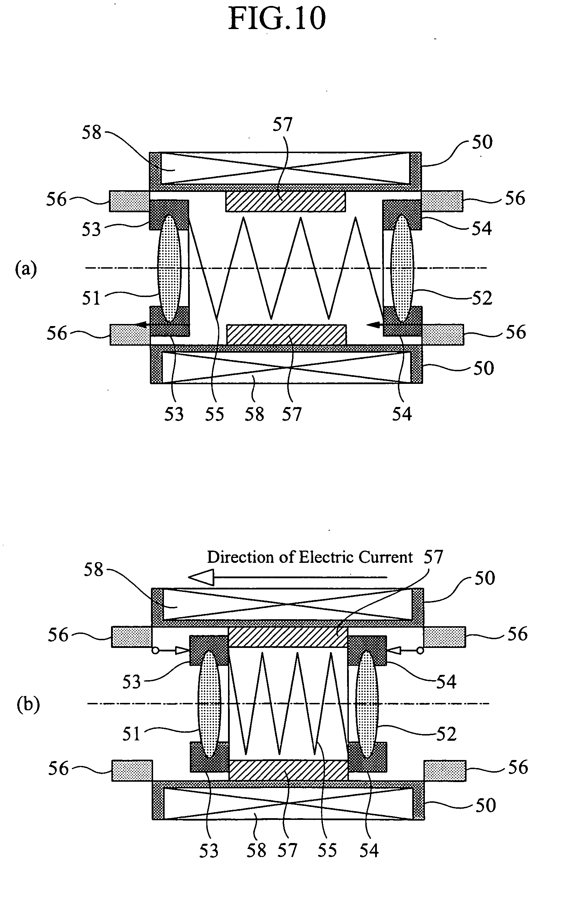

Fig. 10 shows a second embodiment of the present invention. In the present embodiment, a solenoid is used as an actuator. Namely, as shown in Fig. 10, a front lens group 51 and a rear lens group 52 are mounted inside a bobbin 50 which forms a cylinder so as to be capable of movement in the axial direction via a front lens support body 53 and a rear lens support body 54, respectively. Further, Teflon (Registered Trademark) is added to the inner circumferential surface of the bobbin 50, or the bobbin 50 is formed using a resin having a low friction coefficient, or at least another cylinder having a mirror-processed inner circumferential surface is inserted or the like to lower the friction coefficient of the outer circumferential surface of the front lens support body 53 and the rear lens support body 54 in order to make it possible to move forward and backward smoothly.

Further, a compression coil spring 55 is inserted and arranged between the front lens support body 53 and the rear lens support body 54 so that they are both normally biased in separate directions by the elastic restoring force of the compression coil spring 55. Further, positioning stoppers 56 which can make contact with the front lens support body 53 and the rear lens support body 54 are mounted to both ends of the bobbin 50. In this way, the front lens support body 53 and the rear lens support body 54 biased by the compression coil spring 55 make contact with the respective corresponding positioning stoppers 56 and are stopped (see Fig. 10(a)). Further, although omitted from the drawings, a CCD is arranged at a prescribed position behind the bobbin 50 (rear lens support body 54 side), and at this time, the dimensions are set so that the zoom magnification becomes 1x.

Further, in the present embodiment, the front lens support body 53 and the rear lens support body 54 are both made from permanent magnets (the magnetic direction is to the left in the drawings), and the positioning stoppers 56 are made from nonmagnetic bodies. Furthermore, a center positioning stopper 57 made from a magnetic body is arranged at a middle position inside the bobbin 50, and a coil 58 is provided around the outer circumference of the bobbin 50. Further, the length of the center positioning stopper 57 in the axial direction is made to match the spacing d2 (see Fig. 4) between the rear position B of the front lens group and the front position (2) of the rear lens group.

When such structure is formed, in a non-magnetized state, the front lens support body 53 and the rear lens support body 54 are biased in respective separate directions by the elastic restoring force of the compression coil spring 55, and as shown in Fig. 10(a), this forms a base posture in which contact is made with the positioning stoppers 56 provided on the outside. Accordingly, the zoom magnification can be set at 1x.

From this state, as shown in Fig. 10(b), when an electric current is passed through the coil 58 toward the left in the drawings, this generates an electromagnetic force, and from the magnetic field of the permanent magnets forming the front lens support body 53 and the rear lens support body 54, the front lens support body 53 and the rear lens support body 54 mutually move toward the center and are kept in a state attracted to the center positioning stopper 57 made from a magnetic body. In this way, the zoom magnification can be set at αx (e.g., 1.5x).

Of course, the electromagnetic force generated by passing an electric current through the coil 58 is set to exhibit a greater force than the elastic restoring force of the compression coil spring 55. Further, once the state of Fig. 10(b) is formed, because the front lens support body 53 and the rear lens support body 54 are constructed from permanent magnets, and because they are attracted to the center positioning stopper 57 made from a magnetic body, this state will be maintained even if the electric current is switched OFF. Further, when an electric current is applied to the coil 58 in the opposite direction, the electromagnetic force generated by such electric current points in a direction opposite that described above, and this force together with the elastic restoring force of the compression coil spring 55 pulls the front lens support body 53 and the rear lens support body 54 apart in separate directions, and the base posture having a zoom magnification of 1x shown in Fig. 10(a) is returned to.

Further, because a solenoid is used as an actuator, it can be constructed easily on a small scale, and the two positions where the zoom magnification is 1x and αx are set accurately by the positioning stoppers 56 and the center positioning stopper 57.

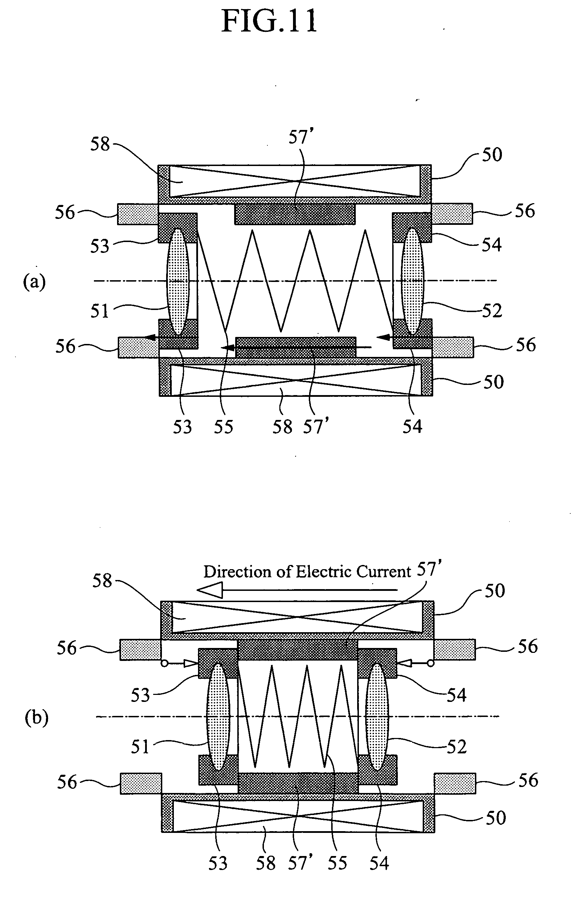

Fig. 11 shows a third embodiment of the present invention. In the present embodiment, the second embodiment described above forms a base, wherein the difference lies in the point that a center positioning stopper 57' is constructed from a permanent magnet. The magnetic direction (the direction of the arrow in the drawing) of this permanent magnet points to the left in the drawing, and this matches the magnetic direction of the permanent magnets forming the front lens support body 53 and the rear lens support body 54. Further, the other structures are the same as those of the second embodiment.

In this way, in the non-magnetized state where no electric current is flowing through the coil 58, as shown in Fig. 11(a), the front lens support body 53 and the rear lens support body 54 are biased in respective separate directions by the elastic restoring force of the compression coil spring 55, and this forms a base posture in which contact is made with the positioning stoppers 56 provided on the outside. Accordingly, the zoom magnification can be set at 1x.

Further, from this state, as shown in Fig. 11 (b), when an electric current is passed through the coil 58 toward the left in the drawings, the front lens support body 53 and the rear lens support body 54 mutually move toward the center, and when they approach within a certain degree, the magnetic attractive force of the center positioning stopper 57' made from a permanent magnet also operates to quickly and reliably maintain an attracted state with the center positioning stopper 57'. In this way, the zoom magnification can be set at αx (e.g., 1.5x). Then, even when the electric current to the coil 58 is switched off, the front lens support body 53 and the rear lens support body 54 are more strongly fixed by the magnetic attractive force between these bodies and the center positioning stopper 57'. Accordingly, in the case of being installed in a portable telephone, for example, it is difficult to hold in a fixed state compared to a digital camera or the like, and it is easy for the portable telephone itself to shake due to shaking hands or the like, but because the components are firmly fixed by the permanent magnets as described above, the zoom magnification can be maintained in a stable state at αx.

Further, in the state where such zoom magnification is αx, when an electric current is passed in the direction opposite that of Fig. 11(b), the base posture shown in Fig. 11(a) is returned to following the same principle as that of the second embodiment described above. Further, because the other structures and operational effects are the same as those of the second embodiment described above, the same reference characters are used for corresponding members, and a detailed description thereof is omitted.

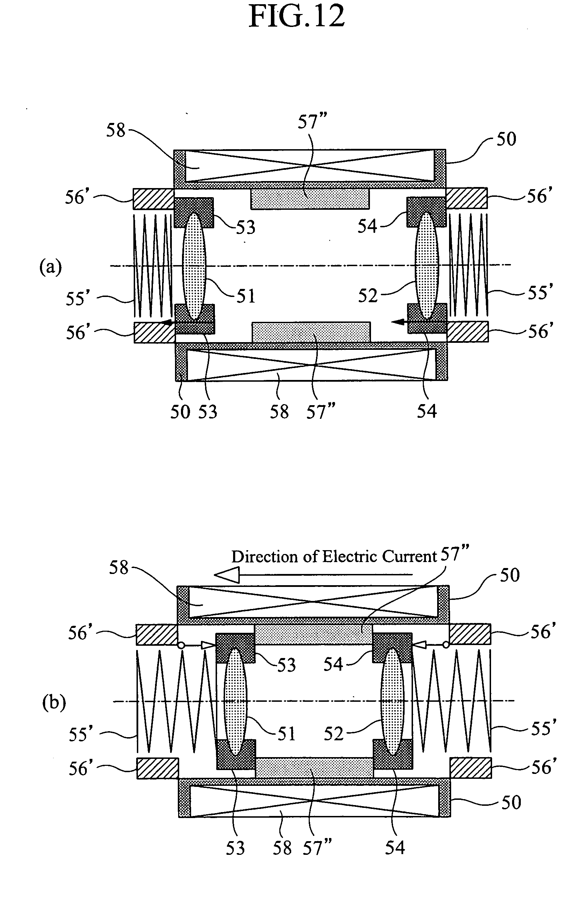

Fig. 12 shows a fourth embodiment of the present invention. In the present embodiment, the second embodiment described above forms a base, wherein the difference is the mounting position of compression coil springs 55'. Namely, a separate compression coil spring 55' is mounted for each of the front lens support body 53 and the rear lens support body 54. The compression coil springs 55' are provided outside the bobbin 50, and are set to normally push the front lens support body 53 and the rear lens support body 54 toward the center. Namely, in the state shown in Fig. 12(a), the compression coil springs 55' are deformed by compression. Further, in an arrangement that is the reverse of that of the second embodiment, positioning stoppers 56' provided on both ends of the bobbin 50 are formed by magnetic bodies, and a center positioning stopper 57" is formed by a nonmagnetic body.

In this way, as shown in Fig. 12(a), the front lens support body 53 and the rear lens support body 54 made from permanent magnets are magnetically attracted respectively to the positioning stoppers 56' made from magnetic bodies and are held in a fixed state which forms a base posture having a zoom magnification of 1x.

Then, from this state, as shown in Fig. 12(b), when an electric current is passed through the coil 58 toward the left in the drawings, the front lens support body 53 and the rear lens support body 54 mutually move toward the center, and when the front lens support body 53 and the rear lens support body 54 move away from the positioning stoppers 56', they are positioned and fixed in contact with the center positioning stopper 57" by the magnetic force generated by the electric current and the elastic restoring force of the compression coil springs 55'. In this way, the zoom magnification can be set in the state αx. In this state, even if the electric current is switched OFF, the front lens support body 53 and the rear lens support body 54 are maintained in the state shown in the drawings by the elastic restoring force of the compression coil springs 55.

Further, when an electric current is passed in the opposite direction from the state shown in Fig. 12(b), the front lens support body 53 and the rear lens support body 54 move away from each other, and the base posture shown in Fig. 12(a) is returned to. After returning, even if the electric current is switched OFF, because the permanent magnets forming the front lens support body 53 and the rear lens support body 54 are attracted to the positioning stoppers 56' made from magnetic bodies, such posture is maintained. Further, because the other structures and operational effects are the same as those of each embodiment described above, the same reference characters are used for corresponding members, and a detailed description thereof is omitted.

Further, in the structure shown in Fig. 12, it is also possible to construct the outside positioning stoppers by nonmagnetic bodies, and construct the center positioning stopper by a magnetic body or a permanent magnet. In this case, the two compression coil springs 55' are set to respectively pull the front lens support body 53 and the rear lens support body 54 to the outside. In this way, it is possible to obtain the two kinds of zoom magnification 1x and αx by the same current passing principle as that of the embodiments described above.

Further, in the second through the fourth embodiments described above, the front lens support body 53 is fixed to one end of the bobbin 50, and by appropriately passing current in a prescribed direction, it goes without saying that it is possible to form a lens drive apparatus which can switch between the two kinds of states of the base posture zoom magnification 1x and the zoom magnification βx.

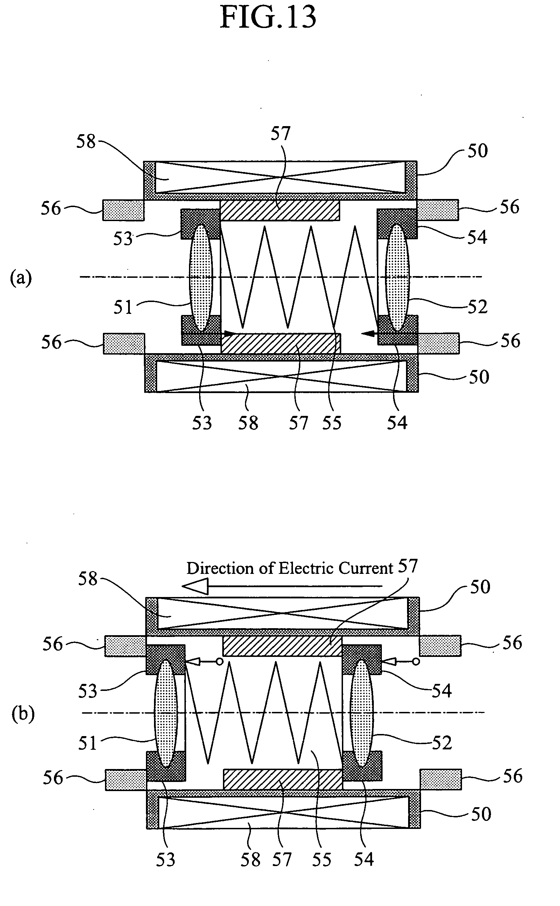

Fig. 13 shows a fifth embodiment of the present invention. In the present embodiment, a solenoid is used as an actuator in the same way as in the second through fourth embodiments, and the operational characteristics shown in Fig. 5 are achieved, and this forms a lens drive apparatus which can obtain the two kinds of zoom magnification 1x and γx.

The basic apparatus structure is the same as that of the second embodiment shown in Fig. 10, wherein the positioning stoppers 56 arranged on the outside of the bobbin 50 are constructed from nonmagnetic bodies, and the center positioning stopper 57 is constructed from a magnetic body. Further, the front lens support body 53 and the rear lens support body 54 are connected to both ends of the compression coil spring 55 arranged between both support bodies, and the front lens support body 53 and the rear lens support body 54 are biased in separate directions by the elastic restoring force of the compression coil spring 55.

Further, the difference is the position of the front lens group 51 (front lens support body 53) at the time of the base posture forming the zoom magnification 1x. Namely, as shown in Fig. 13(a), in the base posture, the front lens support body 53 is held by magnetic attraction in a state in contact with the center positioning stopper 57. Further, in this state, the rear lens support body 54 is biased backward by the elastic restoring force of the compression coil spring 55 and held in a state pushing against the positioning stopper 56. Further, the magnetic direction (direction of the arrows in the drawings) of the permanent magnets forming the front lens support body 53 and the rear lens support body 54 mutually point toward the center.

In this state, when an electric current is passed toward the left in the drawings, the front lens support body 53 and the rear lens support body 54 mutually move forward (toward the left in the drawings), and as shown in Fig. 13(b), the rear lens support body 54 is magnetically attracted to the center positioning stopper 57, and the front lens support body 53 is held in a state pushing against the positioning stopper 56 by the elastic restoring force of the compression coil spring 55. In this way, the front lens support body 53 and the rear lens support body 54 can mutually move forward from the base positions shown in Fig. 13(a), and the amount of such movements can both be made the same by adjusting the length and the arrangement position of the center positioning stopper 57, or they can be made different. Accordingly, as shown in Fig. 5, by setting various dimensions, it is possible to form a state in which the zoom magnification is γx when the front lens support body 53 (front lens group 51) reaches the front position C and the rear lens support body 54 (rear lens group 52) reaches the front-most position (4).

Then, even if the electric current is switched OFF, the zoom magnification γx state is maintained. Further, when an electric current is passed in the opposite direction, the base posture having the zoom magnification 1x shown in Fig. 13(a) is returned to. Accordingly, in the present embodiment, it is possible to construct a lens drive apparatus which obtains the two kinds of zoom magnification 1x and γx from the operational characteristics shown in Fig. 5. Further, because the other structures and operational effects are the same as those of each of the embodiments described above, the same reference characters are used for corresponding members, and a detailed description thereof is omitted.

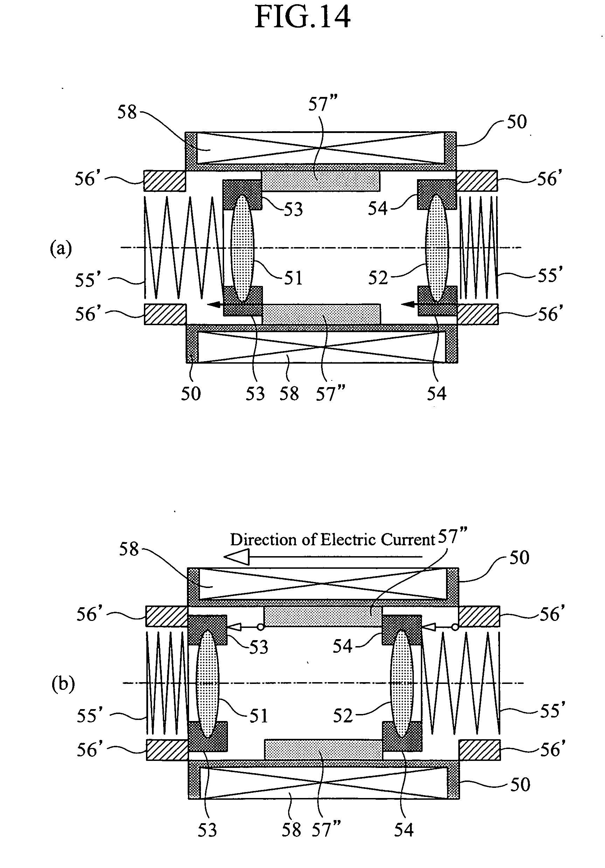

Fig. 14 shows a sixth embodiment of the present invention. In the present embodiment, the fifth embodiment described above forms a base, and two compression coil springs 55' are provided in the same way as in the fourth embodiment to respectively bias the front lens support body 53 and the rear lens support body 54 in respective prescribed directions.

Namely, the center positioning stopper 57" is constructed from a nonmagnetic body, and both positioning stoppers 56' are constructed from magnetic bodies. Further, the magnetic direction (direction of the arrows in the drawings) of the permanent magnets forming the front lens support body 53 and the rear lens support body 54 point forward in the same direction (toward the left in the drawings). Further, the compression coil springs 55' bias the corresponding support bodies 53, 54 toward the center positioning stopper 57". However, the elastic restoring force thereof does not negate the state in which the lens support bodies 53, 54 are magnetically attracted to the positioning stoppers 56'and pull them apart, but is instead a force greater than the magnetic attractive force created between the lens support bodies 53, 54 and the positioning stoppers 56' once the lens support bodies 53, 54 are separated from the positioning stoppers 56' and push against the center positioning stopper 57".

When such structure is formed, as shown in Fig. 14(a), in the base posture, the front lens support body 53 is pushing against the center positioning stopper 57" by the elastic restoring force of the compression coil spring 55', and the rear lens support body 54 is held in a magnetically attracted state to the positioning stopper 56'. In this state, the zoom magnification is set at 1x.

From this state, when an electric current is passed through the coil 58, as shown in Fig. 14(b), the front lens support body 53 and the rear lens support body 54 move forward (toward the left in the drawings) by the magnetic force. Then, while the compression coil spring 55 is deformed by compression, the front lens support body 53 moves forward and is fixed to the positioning stopper 56' by magnetic attraction. In the same way, the rear lens support body 54 is pushed against the center positioning stopper 57" and fixed in place by the elastic restoring force of the compression coil spring 55. In this way, by setting the dimensional shape and arrangement position of the center positioning stopper 57" in the same way as in the fifth embodiment, it is possible to set the zoom magnification at γx.

Of course, even in this embodiment, the state shown in Fig. 14(a) can be returned to by passing an electric current in a direction opposite that of Fig. 14(b). Further, an electric current is passed only at the time the zoom magnification is changed, and after changing, such state is maintained even if the electric current is switched OFF. Further, because the other structures and operational effects are the same as those of each of the embodiments described above, the same reference characters are used for corresponding members, and a detailed description thereof is omitted.

In the second through the sixth embodiments described above, in each case the coil 58 wound around the bobbin 50 used a uniform winding in the axial direction, but the present invention is not limited to this, and by changing the number of windings in accordance with location, it is possible to give a gradient to the magnetic field. Namely, by making the magnetic field the strongest at the stopping positions, it is possible to make it easy to obtain a driving force required for zooming.

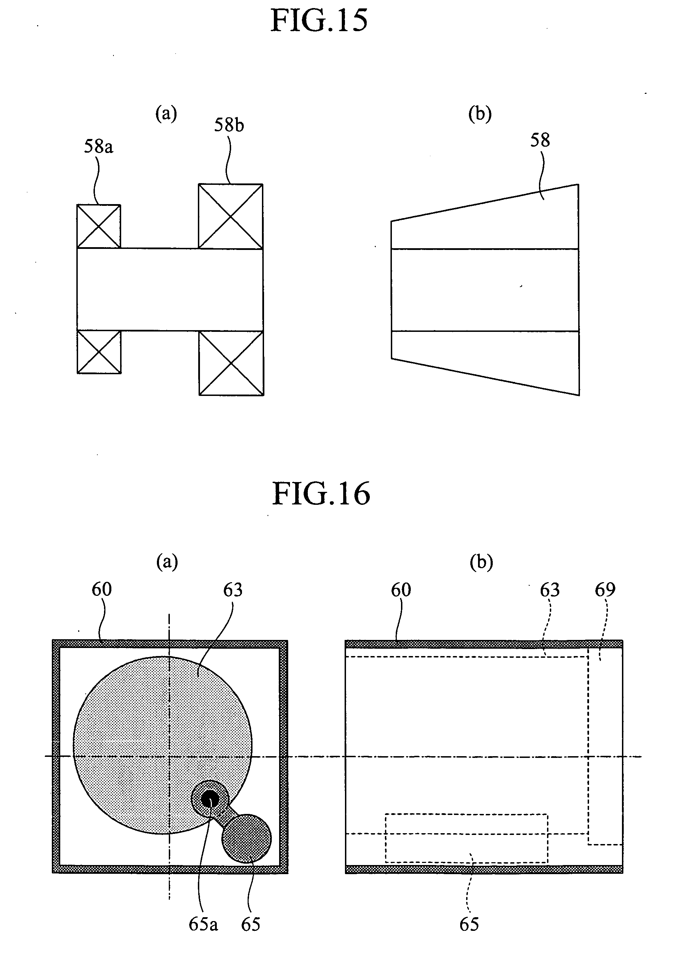

Further, in order to give a gradient to the magnetic field, the coil may be provided with coils 58a, 58b having a different number of windings, and these may be arranged in the axial direction as shown in Fig. 15(a), or the coil may be made to have a changing number of windings in the axial direction as shown in Fig. 15(b), for example. Further, no matter which positions have a strong magnetic field, these are set in view of the lens support body stopping positions or the like, but they are not necessarily limited to the end portions.

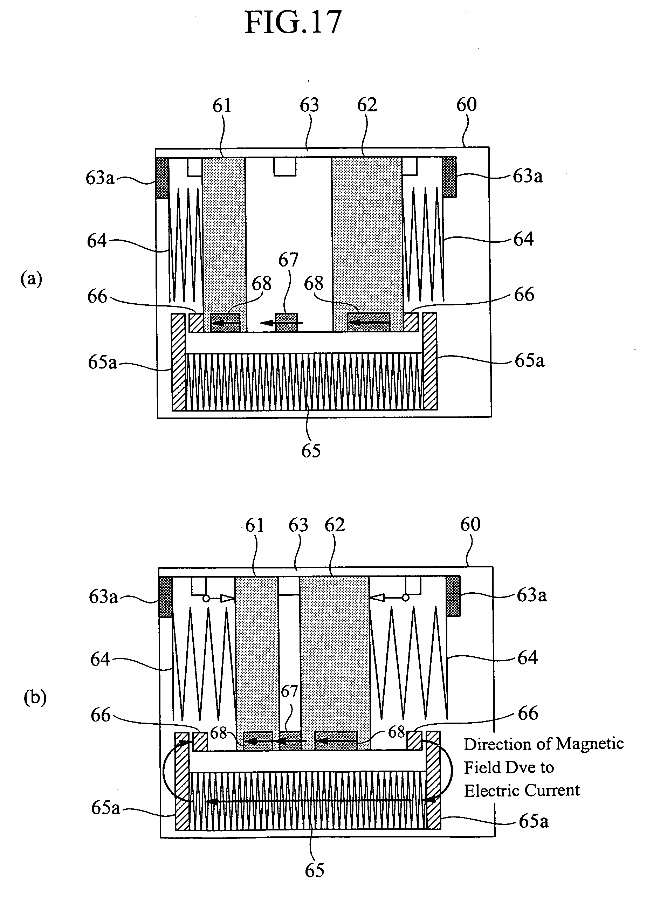

Fig. 16 and Fig. 17 show a seventh embodiment of the present invention. In the present embodiment, the difference with the embodiments described above is a structure which uses an electromagnet as an actuator. Further, this is a type (operational characteristics shown in Fig. 5) which obtains the two kinds of zoom magnification 1x and αx.

Namely, a cylinder 63 in which a front lens group 61 and a rear lens group 62 are mounted so as to be capable of movement in the axial direction, and an electromagnet 65 are arranged close together in parallel inside a rectangular frame 60. Further, the inner circumferential surface of the cylinder 63 is also formed to have a low friction coefficient so that the front lens group 61 and the rear lens group 62 can move forward and backward smoothly.

Further, both ends of the electromagnet 65 are provided with a core 65a, and the tips of the cores 65a overlap with the cylinder 63. The tip portions of the cores 65a form portions which generate an electromagnetic force by the electromagnet 65. Further, an image taking element 69 such as a CCD or the like is arranged at the rear end portion of the frame 60, and light which is incident via the front lens group 61 and the rear lens group 62 forms an image on the image taking element 69.

Further, the front lens group 61 and the rear lens group 62 are constructed to include a prescribed number of lenses and support bodies which support these. Further, a structure is formed in which the front lens group 61 and the rear lens group 62 are normally biased toward the center by compression coil springs 64 arranged between these groups and spring stopping portions 63a provided at both ends of the cylinder 63. Further, two positioning stoppers 66 and one center positioning stopper 67 are arranged at prescribed positions on a line connecting the tips of the cores 65a provided at both ends of the electromagnet 65, and permanent magnets 68 are provided buried inside the outer circumference of the front lens group 61 and the rear lens group 62. More specifically, as shown in Fig. 17(a), the positioning stoppers 66 are formed from magnetic bodies and are provided respectively at positions near both cores 65a so that the front lens group 61 and the rear lens group 62 are stopped by making respective contact therewith. This state forms a base posture in which each of the lens groups 61, 62 is positioned at a base position to set the zoom magnification at 1x.

Further, the center positioning stopper 67 is formed from a permanent magnet, and the magnetic direction (direction of the arrow in the drawings) is the same direction (front direction) as that of the permanent magnets 68 buried respectively in the front lens group 61 and the rear lens group 62. Further, as shown in Fig. 17(b), the length and the arrangement position of the center positioning stopper 67 is set so that the front lens group 61 and the rear lens group 62 are positioned at the rear position B and the front position (2), respectively, at the time when both are close together pushing against the center positioning stopper 67.

When such structure is formed, in the base posture, as shown in Fig. 17(a), the compression coil springs 64 are deformed by compression, and the front lens group 61 and the rear lens group 62 are fixed by the magnetic attractive force from the permanent magnets 68 in a state making contact respectively with the positioning stoppers 66 provided on the outside. Accordingly, the zoom magnification can be set at 1x.

Then, from this state, when an electric current is passed through the electromagnet 65, a magnetic field like that shown in Fig. 17(b) is generated, and this generated magnetic field magnetically repels the permanent magnets 68 provided in the front lens group 61 and the rear lens group 62, and the front lens group 61 and the rear lens group 62 are separated from the positioning stoppers 66 and moved toward the center by the elastic restoring force of the compression coil springs 64. Further, the front lens group 61 and the rear lens group 62 are stopped in a state where they are pushing against the center positioning stopper 67. In this way, the zoom magnification can be set at αx.

Further, even if the electric current to the electromagnet 65 is switched OFF, the state shown in Fig. 17(b) is maintained by the magnetic attractive force generated between the permanent magnets 68 provided in the front lens group 61 and the rear lens group 62 and the center positioning stopper 67 formed from a permanent magnet.

Further, in the state shown in Fig. 17(b), when an electric current is passed through the electromagnet 65 in the opposite direction, the permanent magnets 68 are mutually moved to the outside by the magnetic attractive force of the electromagnet 65, and the zoom magnification state 1x shown in Fig. 17(a) is returned to. Then, this state is maintained even if the electric current is switched OFF. Further, because the other structures and operational effects are the same as those of each of the embodiments described above, a detailed description thereof is omitted.

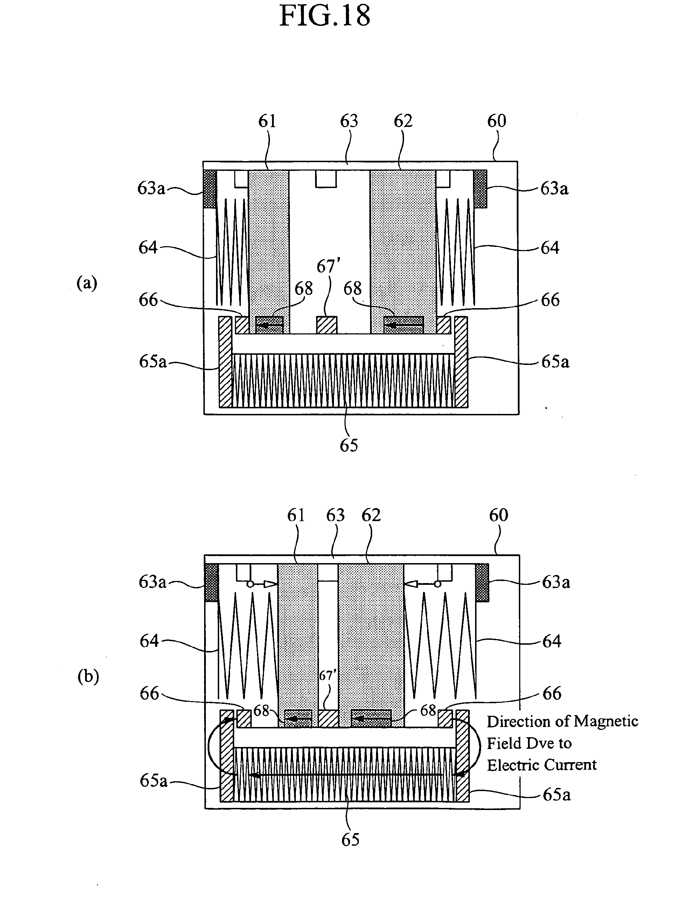

Fig. 18 shows an eighth embodiment of the present invention. In the present embodiment, the seventh embodiment described above forms a base, wherein the difference lies in the point that a center positioning stopper 67' is constructed from a magnetic body, and the other structures are the same. When such structure is formed, in the base posture shown in Fig. 18(a), the zoom magnification can be set at 1x, and from this state, as shown in Fig. 18(b), when an electric current is passed through the electromagnet 65, the permanent magnets 68 provided in the front lens group 61 and the rear lens group 62 are repelled by the magnetic field generated by the electromagnet 65, and this moves the front lens group 61 and the rear lens group 62 toward the center. Accordingly, the zoom magnification can be set at αx. Of course, from the state of Fig. 18(b), it is possible to return to the state of Fig. 18(a) by passing an electric current through the electromagnet 65 in the opposite direction. Further, because the other states and operational effects are the same as those of the seventh embodiment described above, the same reference characters are used for corresponding members, and a detailed description thereof is omitted.

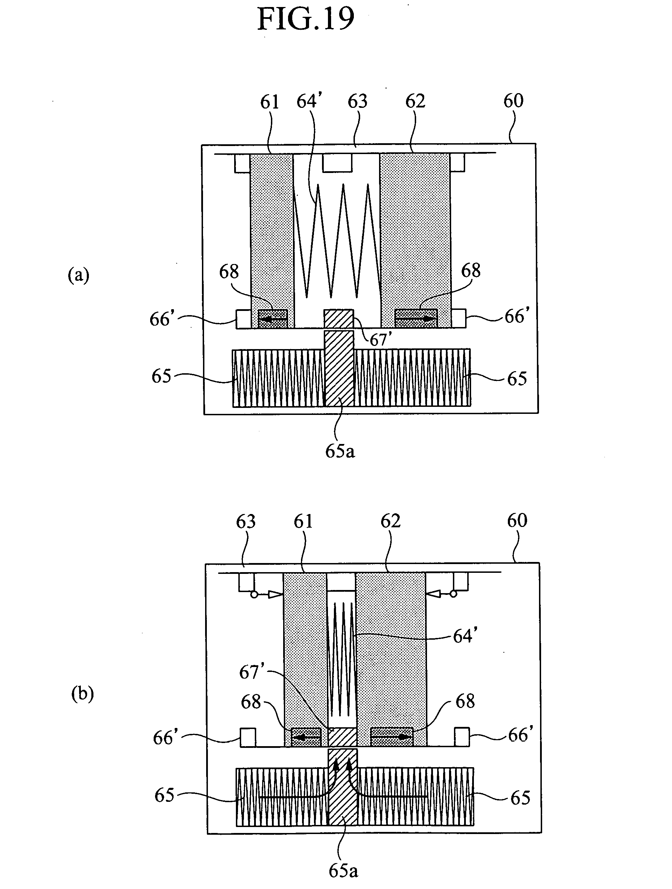

Fig. 19 shows a ninth embodiment of the present invention. In the present embodiment, the seventh and eighth embodiments described above form a base. Further, the point of difference is the provision of one compression coil spring 64' between the front lens group 61 and the rear lens group 62, wherein the front lens group 61 and the rear lens group 62 are biased away from each other by the elastic restoring force of the compression coil spring 64'. Further, the positioning stoppers 66' provided at both ends are formed from nonmagnetic bodies, and the center positioning stopper 67' is formed from a magnetic body. Furthermore, the core 65a provided in the electromagnet 65 is provided in a center portion of the electromagnet 65 in the axial direction. More specifically, it is preferably positioned near the center positioning stopper 67'. Further, the magnetic direction (direction of the arrows in the drawings) of the permanent magnets 68 provided in the front lens group 61 and the rear lens group 62 point in mutually opposite directions. Of course, even though omitted from the drawings, an image taking element is arranged at a prescribed position behind the frame 60.

When such structure is formed, in the base posture in which no electric current is flowing through the electromagnet 65, as shown in Fig. 19(a), the front lens group 61 and the rear lens group 62 are separated by the elastic restoring force of the compression coil spring 64' and are fixed in position by being pushed against the positioning stoppers 66' provided at both ends of the cylinder 63. In this way, the zoom magnification can be set at 1x.

From this state, as shown in Fig. 19(b), when a magnetic field like that shown in the drawings is generated by passing an electric current through the electromagnet 65, the permanent magnets 68 are magnetically attracted and move to the center. In this way, the front lens group 61 and the rear lens group 62 are fixed in position in a state making contact with the center positioning stopper 67', and even if the electric current to the electromagnet 65 is switched OFF in this state, the compression deformed state of the compression coil spring 64' is maintained by the magnetic attractive force between the permanent magnets 68 and the center positioning stopper 67'. Accordingly, the zoom magnification can be set at αx.

Of course, from this state it is possible to return to the state shown in Fig. 19(a) by applying an electric current to the electromagnet 65 in a direction opposite that shown in Fig. 19(b). Further, because the other structures and operational effects are the same as those of the seventh and eighth embodiments described above, the same reference characters are used for corresponding members, and a detailed description thereof is omitted.

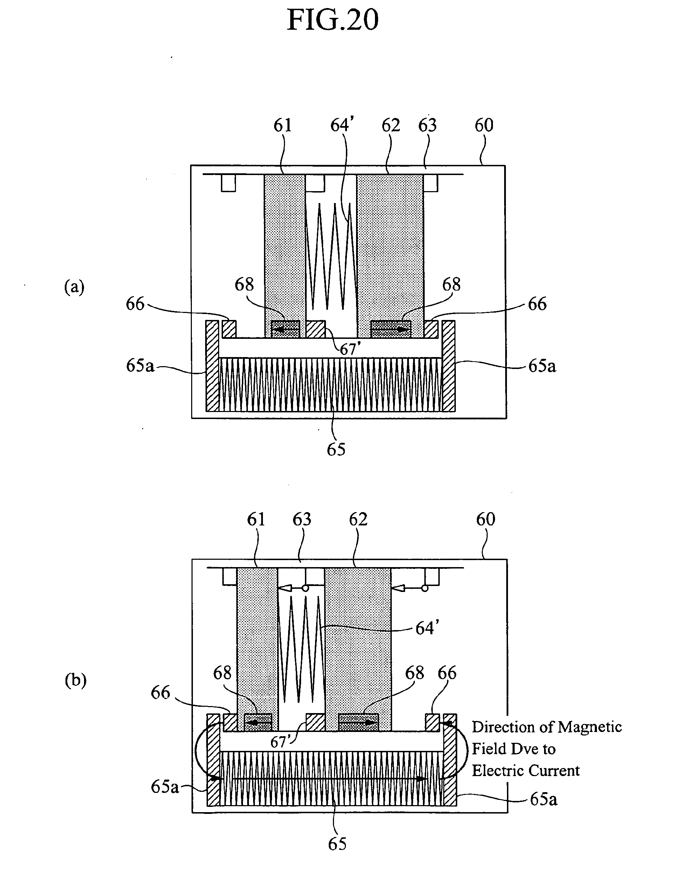

Fig. 20 shows a tenth embodiment of the present invention. In the present embodiment, an electromagnet is used as an actuator in the same way as in the seventh through ninth embodiments shown in Fig. 18, wherein the operational characteristics shown in Fig. 5 are achieved, and this forms a lens drive apparatus which can obtain the two kinds of zoom magnification 1x and γx.

The basic structure is the same as that of the eighth embodiment, wherein the positioning stoppers 66 arranged at both ends of the cylinder 63 are constructed from magnetic bodies, and the center positioning stopper 67' is also constructed from a magnetic body. Further, the front lens group 61 and the rear lens group 62 are connected to both ends of the compression coil spring 64' arranged between both lens groups, and the front lens group 61 and the rear lens group 62 are biased in separate directions by the elastic restoring force of the compression coil spring 64'.

Further, the difference is the position of the front lens group 61 at the time of the base posture forming the zoom magnification 1x. Namely, as shown in Fig. 20(a), in the base posture, the front lens group 61 is held by magnetic attraction in a state in contact with the center positioning stopper 67'. Further, in this state, the rear lens group 62 is biased backward by the elastic restoring force of the compression coil spring 64' and held in a state pushing against the positioning stopper 66. Further, the magnetic direction (direction of the arrows in the drawings) of the permanent magnets 68 provided in the front lens group 61 and the rear lens group 62 mutually point toward the outside.

In this state, when an electric current is passed through the electromagnet 65, a magnetic field due to the electromagnet 65 is generated as shown in Fig. 20(b), whereby the permanent magnets 68 are attracted/repelled, and the front lens group 61 and the rear lens group 62 mutually move forward (toward the left in the drawings), the rear lens group 62 is magnetically attracted to the center positioning stopper 67', and the front lens group 61 is held in a state pushing against the positioning stopper 66 by the elastic restoring force of the compression coil spring 64'. In this way, the front lens group 61 and the rear lens group 62 can mutually move forward from the base posture shown in Fig. 20(a), and the amount of such movements can both be made the same by adjusting the length and the arrangement position of the center positioning stopper 67', or they can be made different. Accordingly, as shown in Fig. 5, by setting various dimensions, it is possible to set the zoom magnification at γx when the front lens group 61 reaches the front position C and the rear lens group 62 reaches the front-most position (4).

Then, even if the electric current is switched OFF, the zoom magnification γx state is maintained. Further, when an electric current is passed in the opposite direction, the base posture having the zoom magnification 1x shown in Fig. 20(a) is returned to. Accordingly, in the present embodiment, it is possible to construct a lens drive apparatus which obtains the two kinds of zoom magnification 1x and γx from the operational characteristics shown in Fig. 5. Further, because the other structures and operational effects are the same as those of each of the embodiments described above, the same reference characters are used for corresponding members, and a detailed description thereof is omitted.

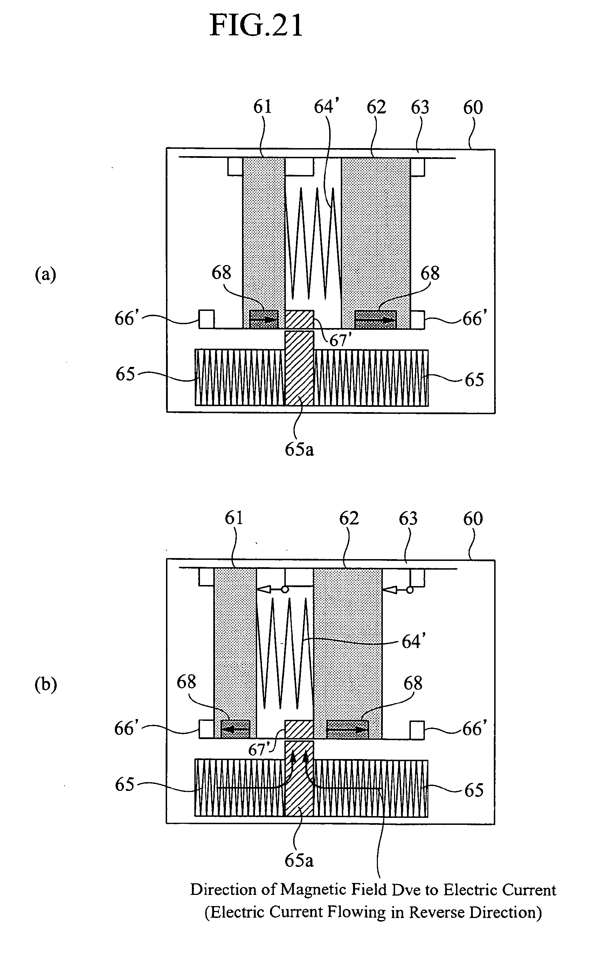

Fig. 21 shows an eleventh embodiment of the present invention. The present embodiment is the type which obtains the two kinds of zoom magnification 1x and γx in the same way as in the tenth embodiment described above. As shown in Fig. 21, in the present embodiment, the electromagnet 65 is different compared to that of the tenth embodiment. Namely, a core 65a is provided in a center position of the electromagnet 65. In actuality, this is achieved by interposing the core 65a between two electromagnets 65. The structure of the electromagnets 65 is the same as that in the ninth embodiment shown in Fig. 19. Further, the magnetic direction (direction of the arrows in the drawings) of the permanent magnets 68 provided respectively in the front lens group 61 and the rear lens group 62 both point backward in the same direction (toward the right in the drawings). Further, the positioning stoppers 66' provided at both ends of the cylinder 63 are made from nonmagnetic bodies.

When such structure is formed, from the state (zoom magnification 1x) of the base posture shown in Fig. 21, by passing an electric current through the electromagnets 65 in a prescribed direction, as shown in Fig. 21(b), the front lens group 61 and the rear lens group 62 both move forward, and this makes it possible to set the zoom magnification at γx. Further, by passing an electric current in a direction opposite that of Fig. 21(b) from such state, it is possible to return to the state shown in Fig. 21(a). Further, because the other structures and operational effects are the same as those of each of the embodiments described above, the same reference characters are used for corresponding members, and a detailed description thereof is omitted.

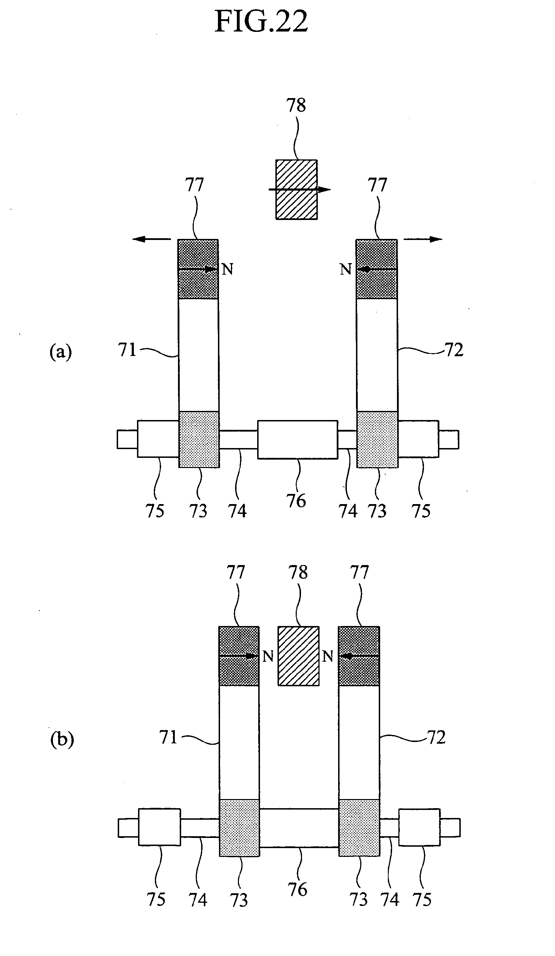

From Fig. 22 onward, a permanent magnet is used as an actuator. Fig. 22 shows the essential portion of a twelfth embodiment of the present invention. Namely, in the present embodiment, slide guides 73 are mounted at prescribed positions of the outer circumference of a front lens group 71 and a rear lens group 72, whereby the front lens group 71 and the rear lens group 72 can freely move in the axial direction along a slide shaft 74 via the slide guides 73. Of course, the front lens group 71 and the rear lens group 72 use a structure in which the lenses are mounted inside support bodies, wherein the optical axes of the lenses are aligned. Further, these elements are arranged so that an image is formed on an image taking element such as a CCD or the like omitted from the drawings arranged behind the rear lens group 72.

Further, positioning stoppers 75 are mounted at prescribed positions of both ends of the slide shaft 74, and a center positioning stopper 76 is provided at a middle point of the slide shaft 74. In this way, the front lens group 71 and the rear lens group 72 can move between the center positioning stopper 76 and the positioning stoppers 75. Further, the distance between the positioning stoppers 75 and the length and the arrangement position of the center positioning stopper 76 are set so as to obtain the operational characteristics shown in Fig. 4.

Namely, as shown in Fig. 22(a), in the state where the slide guides 73 of the front lens group 71 and the rear lens group 72 are both making contact with the positioning stoppers 75, the front lens group 71 and the rear lens group 72 are set so as to be positioned at the base positions A and (1), respectively. In this way, the zoom magnification can be set at 1x.

Further, as shown in Fig. 22(b), in the state where the slide guides 73 of the front lens group 71 and the rear lens group 72 are both making contact with the center positioning stopper 76, the front lens group 71 and the rear lens group 72 are set so as to be positioned at the rear position B and the front position (2), respectively. In this way, the zoom magnification can be set at αx.

Further, as an example of the drive mechanism for switching the zoom magnification between 1x and αx, permanent magnets 77 are provided in the front lens group 71 and the rear lens group 72, and a movable member 78 formed from a magnetic body is inserted so as to freely appear and disappear (be inserted and removed) between the permanent magnets 77. Namely, because the facing surfaces have the same pole, the permanent magnets 77 repel each other. In this way, as shown in Fig. 22(a), when the movable member 78 formed from a magnetic body is not inserted between the permanent magnets 77, the permanent magnets 77 move in a direction away from each other due to magnetic repulsion, and the slide guides 73 are fixed in position in a state making contact with the positioning stoppers 75.

In this state, as shown in Fig. 22(b), when the movable member 78 formed from a magnetic body is inserted between the permanent magnets 77, both permanent magnets 77 are magnetically attracted to the movable member 78, and this makes both permanent magnets 77 approach the movable member 78 formed from a magnetic body. In this way, the slide guides 73 are fixed in a state making contact with the center positioning stopper 76. Of course, when the movable member 78 formed from a magnetic body is removed from this state, the state shown in Fig. 22(a) is returned to.

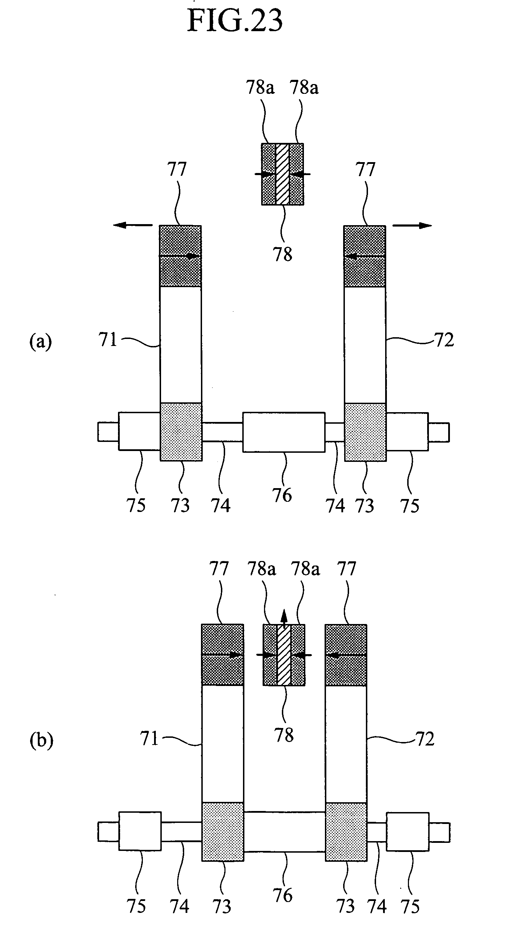

Further, in the present embodiment, it is possible to make various changes to the embodiment. Namely, as shown in Fig. 23, for example, permanent magnets 78a can be attached to both sides of the movable member 78 formed from a magnetic body, and this forms a magnetic attraction between the attached permanent magnets 78a and the permanent magnets 77 provided in the front lens group 71 and the rear lens group 72.

In this way, in the case where the movable member 78 formed from a magnetic body is removed, the permanent magnets 77 magnetically repel each other in the same way as in the twelfth embodiment, and the base posture shown in Fig. 23(a) is maintained. Then, from this state, when the movable member 78 formed from a magnetic body and having the attached permanent magnets 78a is inserted between the permanent magnets 77 as shown in Fig. 23(b), a magnetic attraction is created between mutually facing permanent magnets 77, 78a, whereby they approach more smoothly, and this state (the state where the zoom magnification is αx) can be maintained more securely. Further, because the other structures and operational effects are the same as those of the twelfth embodiment described above, the same reference characters are used for corresponding members, and a detailed description thereof is omitted.

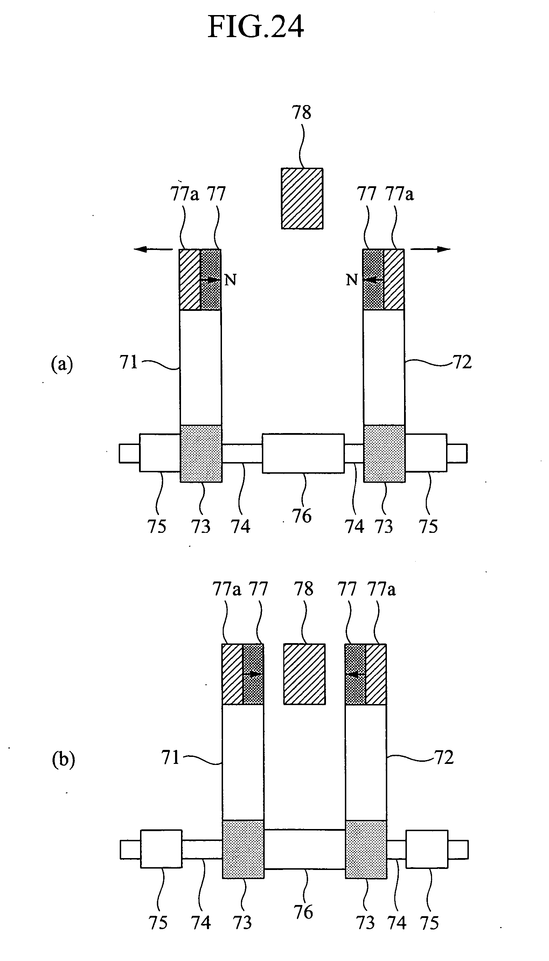

As an example of another embodiment, as shown in Fig. 24, with the twelfth embodiment forming a base, a structure can be formed in which the permanent magnets 77 mounted in the front lens group 71 and the rear lens group 72 are made thin (roughly half) and arranged at facing sides, and magnetic bodies 77a are arranged on the opposite sides (outside). When this is done, it is possible to reduce the amount of use of expensive permanent magnets, and this makes it possible to expect a cost reduction result. Further, because the other structures and operational effects are the same as those of the twelfth embodiment described above, the same reference characters are used for corresponding members, and a detailed description thereof is omitted.

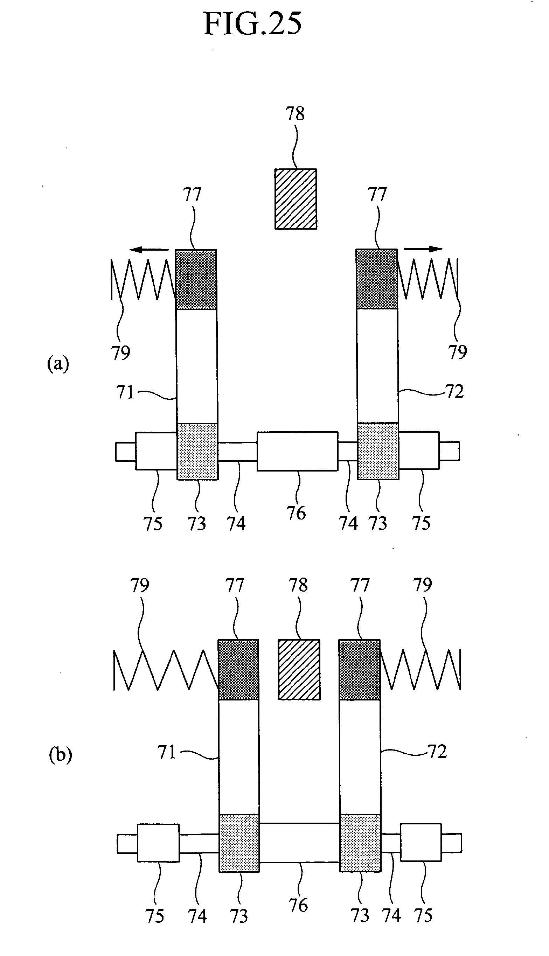

Further, as shown in Fig. 25, it is possible to use the force of compression coil springs 79. Namely, with the twelfth embodiment forming a base, one end of each of the compression coil springs 79 is fastened to the outside of the permanent magnets 77 provided in the front lens group 71 and the rear lens group 72. Of course, the other ends of the compression coil springs 79 have positions which are restricted by spring restrictors (see characters 63a in Fig. 17 or the like) or the like.

In this way, as shown in Fig. 25(a), when the movable member 78 formed from a magnetic body is removed from between the permanent magnets 77, the permanent magnets 77 repel each other and are held apart while the compression coil springs 79 are deformed by compression, and the zoom magnification is set at 1x. Further, as shown in Fig. 25(b), when the movable member 78 is inserted between the permanent magnets 77, in addition to the magnetic attraction between the movable member 78 and the permanent magnets 77, the elastic restoring force of the compression coil springs 79 make it possible to quickly set the zoom magnification at αx as shown in the drawings. Further, because the other structures and operational effects are the same as those of the twelfth embodiment described above, the same reference characters are used for corresponding members, and a detailed description thereof is omitted.

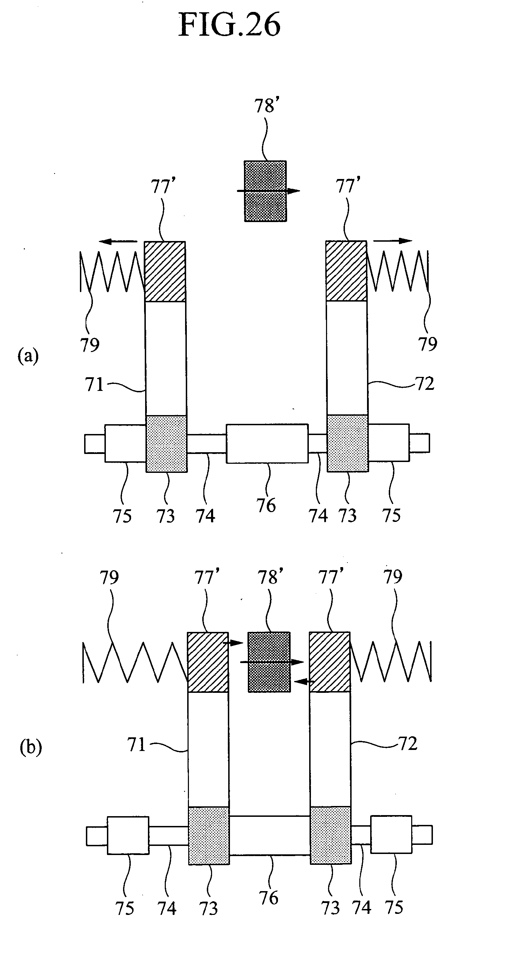

Further, by using the compression coil springs 79 as described above, as shown in Fig. 26, for example, magnetic bodies 77' can be mounted in the front lens group 71 and the rear lens group 72, and a movable member 78' formed from a permanent magnet can be inserted and removed between the magnetic bodies 77'. In this way, as shown in Fig. 26(a), when the movable member 78' formed from a permanent magnet is removed from between the magnetic bodies 77', the magnetic bodies 77' together with the front lens group 71 and the rear lens group 72 are held apart by the elastic restoring force of the compression coil springs 79, the zoom magnification can be set at 1x, and this makes it possible to position the slide guides 73 in firm contact with the positioning stoppers 75.

In this state, as shown in Fig. 26(b), when the movable member 78' formed from a permanent magnet is inserted between the magnetic bodies 77', a magnetic attractive force is generated, and this makes it possible to attract and fix both magnetic bodies 77'. Further, because the other structures and operational effects are the same as those of the twelfth embodiment described above, the same reference characters are used for corresponding members, and a detailed description thereof is omitted.

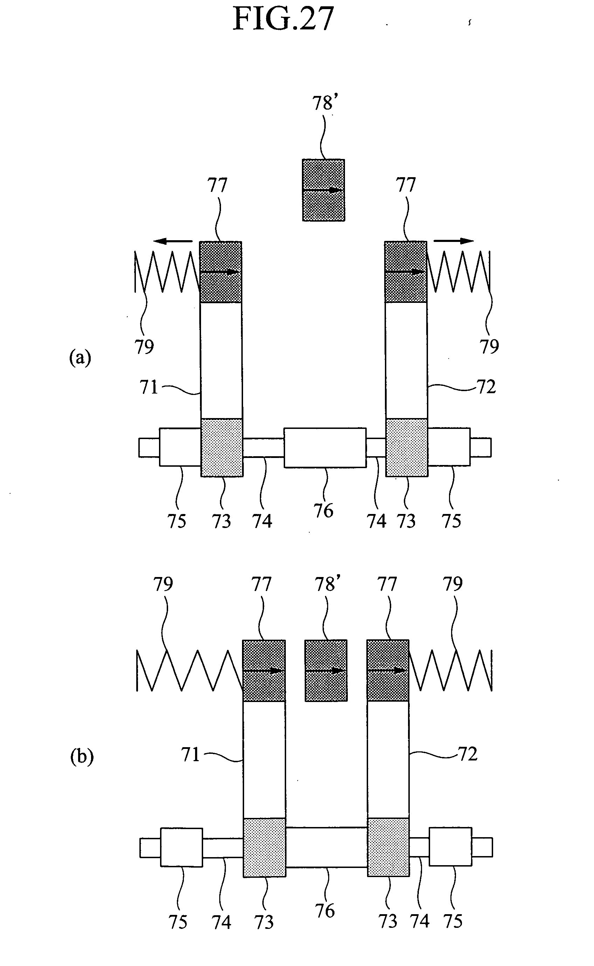

Further, as shown in Fig. 27, it is possible to use permanent magnets 77 in place of the magnetic bodies 77' in the embodiment shown in Fig. 26. In this case, as shown in Fig. 27(a), in the state where the movable permanent magnet 78' is not present, the elastic restoring force of the compression coil springs 79 is greater than the magnetic attractive force between the permanent magnets 77 mounted in the front lens group 71 and the rear lens group 72, and the zoom magnification is set at 1x as shown in the drawings. Then, when the movable member 78' formed from a permanent magnet is inserted between the permanent magnets 77, a large magnetic attractive force is generated between the movable member 78' and the permanent magnets 77, and as shown in Fig. 27(b), the slide guides 73 are stopped by being pushed against the center positioning stopper 76. In this way, the zoom magnification can be set at αx. Further, because the other structures and operational effects are the same as those of the twelfth embodiment described above, the same reference characters are used for corresponding members, and a detailed description thereof is omitted.

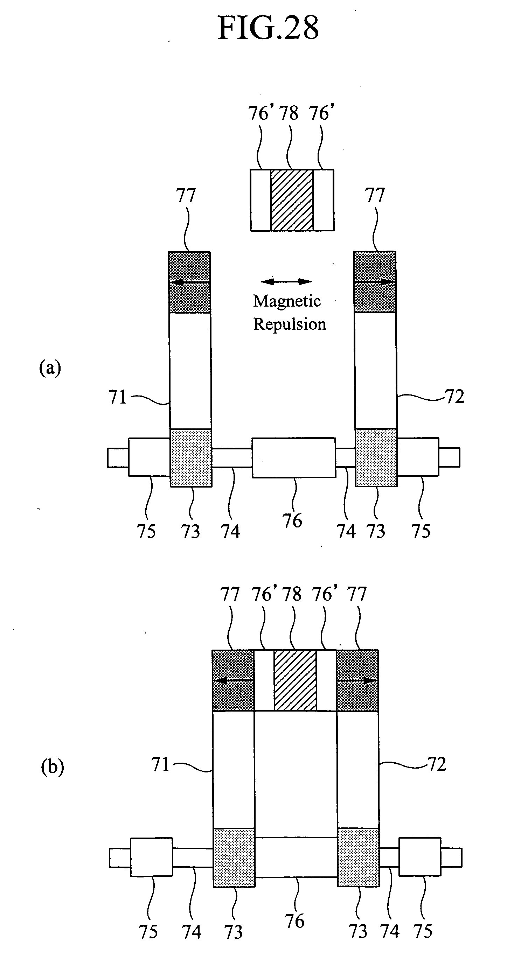

Fig. 28 shows another embodiment. In this embodiment, a center positioning stopper 76' is mounted to both sides of the movable member 78 formed from a magnetic body. In this way, in the state where the movable member 78 is removed as shown in Fig. 28(a), the permanent magnets 77 repel each other, and the slide guides 73 are fixed in position making contact with the positioning stoppers 75 at both ends. Further, in the case where the movable member 78 is inserted between the permanent magnets 77, a magnetic attraction is created between the magnetic body 78 and the permanent magnets 77, and as shown in Fig. 28(b), the permanent magnets 77 make contact with the center positioning stoppers 76', and this position is maintained. Of course, from this state, when the movable member 78 formed from a magnetic body is moved to the outside, the permanent magnets 77 repel each other, and the state shown in Fig. 28(a) is returned to. Further, because the other structures and operational effects are the same as those of the twelfth embodiment described above, the same reference characters are used for corresponding members, and a detailed description thereof is omitted.

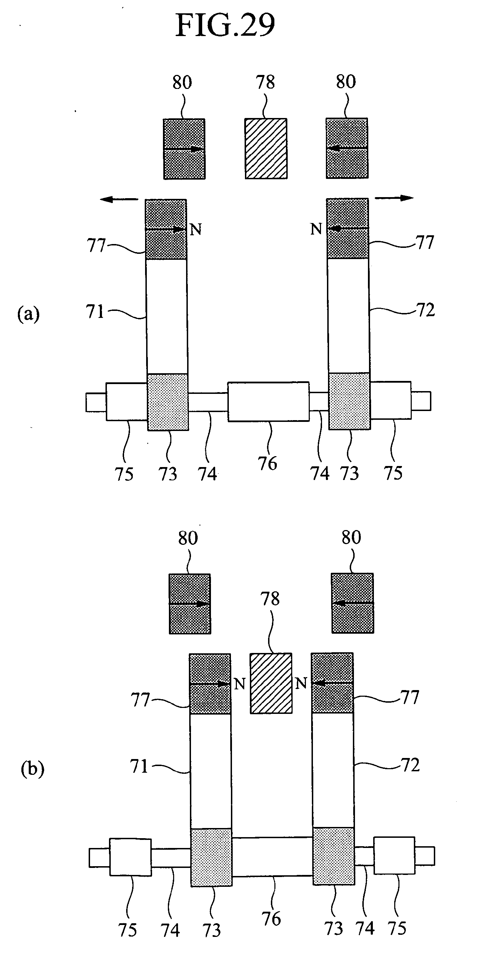

Fig. 29 shows another embodiment. In this embodiment, the twelfth embodiment forms a base, and auxiliary magnets 80 are provided near the stopping positions (see Fig. 29(a)) at the time when the movable member 78 formed from a magnetic body is moved to the outside. Moreover, the spacing of the auxiliary magnets 80 is shorter than the spacing of the permanent magnets 77 at the time when the front lens group 71 and the rear lens group 72 repel each other as shown in Fig. 29(a), and as shown in Fig. 29(b), is longer than the spacing of the permanent magnets 77 at the time when the front lens group 71 and the rear lens group 72 are magnetically attracted. In this way, as is clear from Figs. 29(a), (b), because the spacing of the pair of permanent magnets 77 is shorter than the spacing of the auxiliary magnets 80 when the movable member 78 formed from a magnetic body is inserted, such state is stabilized, and even in the case where the movable member 78 is moved and removed from such state, because the permanent magnets 77 or the auxiliary magnets 80 are near, it is possible to move the movable member 78 smoothly by a small force when it is removed from the present state. Further, because the other structures and operational effects are the same as those of the twelfth embodiment described above, the same reference characters are used for corresponding members, and a detailed description thereof is omitted.

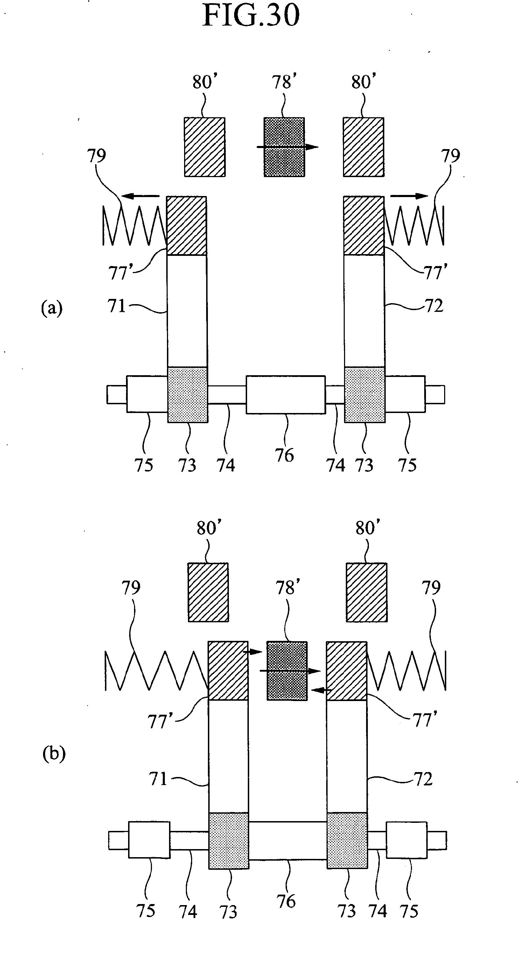

Further, in the technological concept shown in Fig. 29 described above, in the case where the movable member 78' is a permanent magnet as shown in Fig. 30, for example, it is possible to achieve the same function by providing auxiliary magnetic bodies 80' in place of the auxiliary magnets 80.

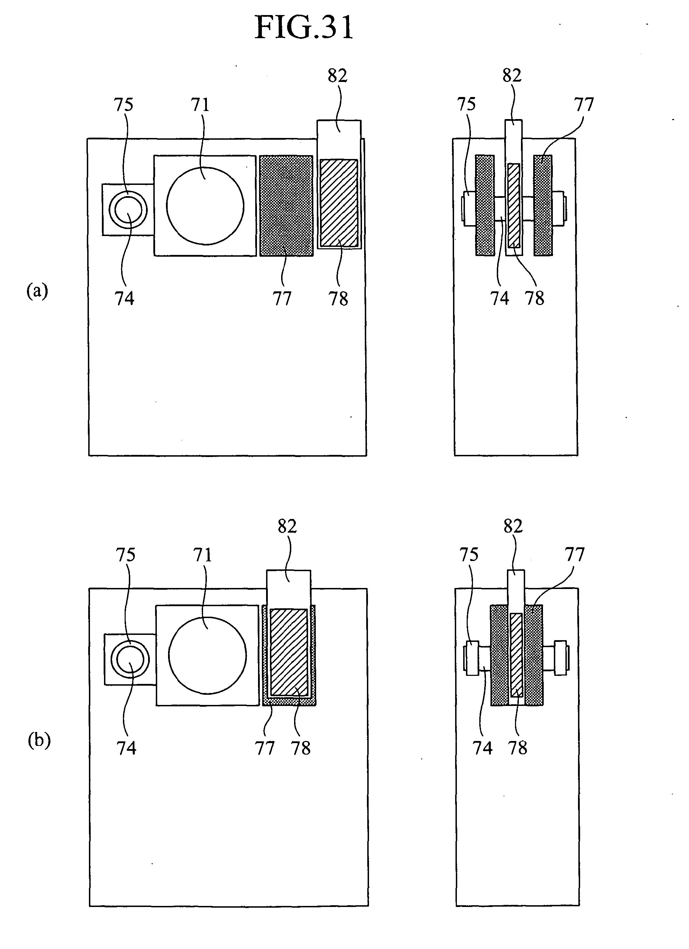

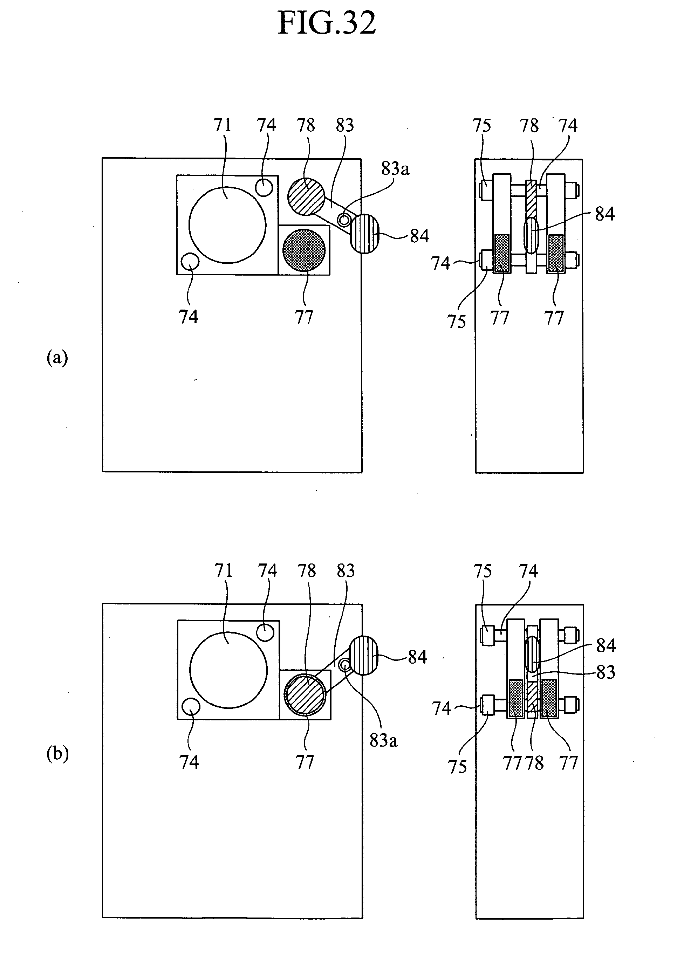

In the twelfth embodiment and the various embodiments that followed described above, the specific drive mechanism for moving the movable members 78, 78' can use the various structures shown in Fig. 31 onward. First, in both Fig. 31 and Fig. 32, movement is carried out by manual control. Namely, in Fig. 31, an operation lever 82 is provided on the movable member 78 formed from a magnetic body, and by holding and moving the operation lever 82 back and forth on a straight line, the user can switch between the two states of the state of the base posture (zoom magnification 1x) when the movable member 78 is removed from between the permanent magnets 77 as shown in Fig. 31(a), and the state where the zoom magnification is αx when the movable member 78 is inserted between the permanent magnets 77 as shown in Fig. 31 (b).

Further, in the embodiment described above, the movable member 78 and the operation lever 82 are made to carry out linear motion, but as shown in Fig. 32, an operation lever 83 having one end attached to the movable member 78 formed from a magnetic body is connected to a rotation shaft 83a, and an operation portion 84 is provided on the other end of the operation lever 82. In this way, by moving the operation portion 84 roughly up and down (in actuality, movement is along an arc-shaped path), the operation lever 83 rotates within a prescribed angular range in the positive and reverse directions around the rotation shaft 83a. Accordingly, it is possible to switch between the two states of the state of the base posture (zoom magnification 1x) when the movable member 78 is removed from between the permanent magnets 77 as shown in Fig. 32(a), and the state where the zoom magnification is αx when the movable member 78 is inserted between the permanent magnets 77 as shown in Fig. 32(b).

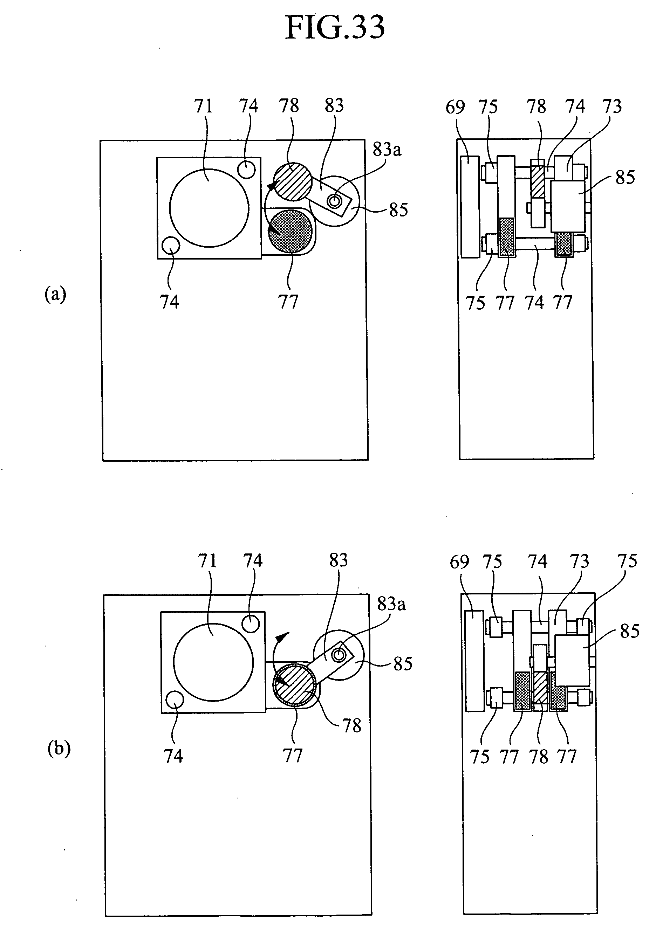

Further, as shown in Fig. 33, with the structure shown in Fig. 32 forming a base, it is possible for the rotation shaft 83a to be made the output shaft of a stepping motor 85. When such structure is used, by rotating the stepping motor 85 in the positive and reverse directions, it is possible to automatically insert and remove the movable member 78 between the permanent magnets 77 to switch the zoom magnification (see Fig. 33(a), (b)).

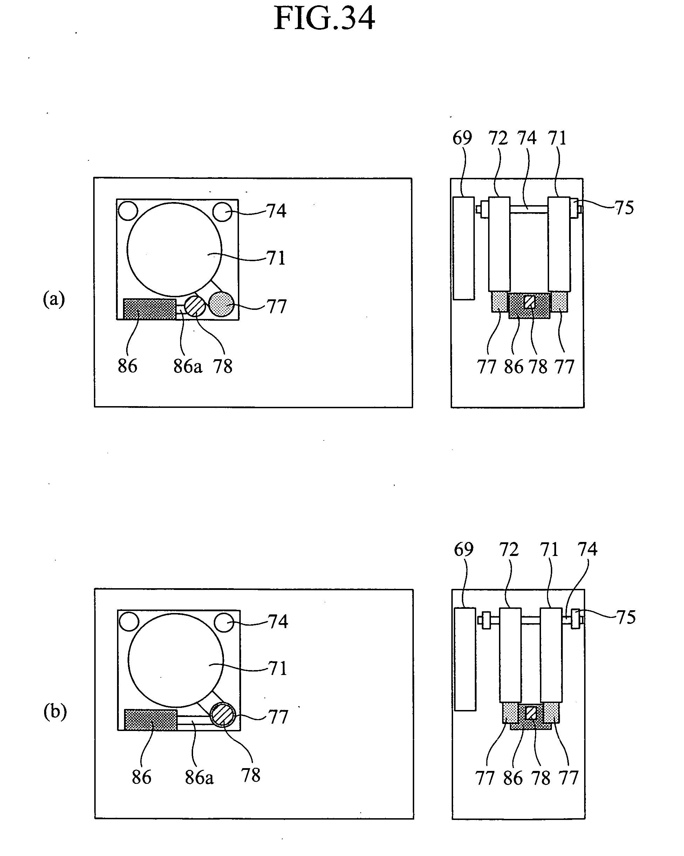

Furthermore, it is possible to use a linear actuator 86 as the actuator when the movable member 78 is moved automatically. Namely, as shown in Fig. 34, the movable member 78 is provided in the tip of a rod 86a which moves back and forth in a straight line forming the linear actuator 86, and adjustments are carried out so that the base posture (zoom magnification 1x) is obtained (see Fig. 34(a)) when the movable member 78 is removed from between the permanent magnets 77 in the case where the rod 86a is pulled back, and the zoom magnification becomes αx (see Fig. 34(b)) when the movable member 78 is inserted between the permanent magnets 77 in the case where the rod 86a is protruding the most. In this way, by driving the linear actuator 86a by operating a switch omitted from the drawings, it is possible to switch between two zoom magnifications.

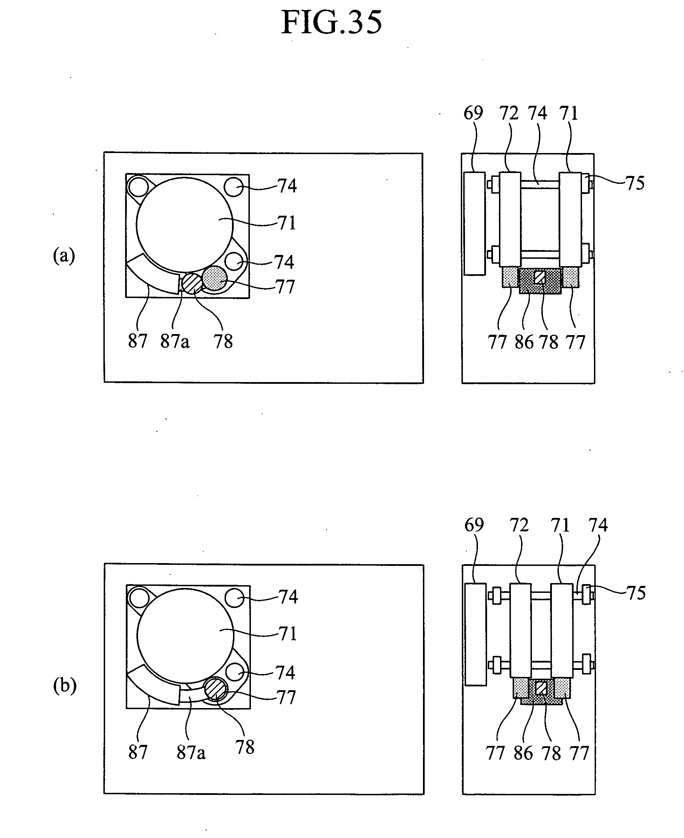

Further, as shown in Fig. 35, even when a curved rod 87a is used as an actuator 87 using back and forth movement along an arc shape, it is possible to switch between two kinds of zoom magnification based on a switch operation the same as that described above.

Further, the specific examples of each drive mechanism described above were shown as being applied to the twelfth embodiment, but it is of course possible to apply the same structures to the other embodiments.

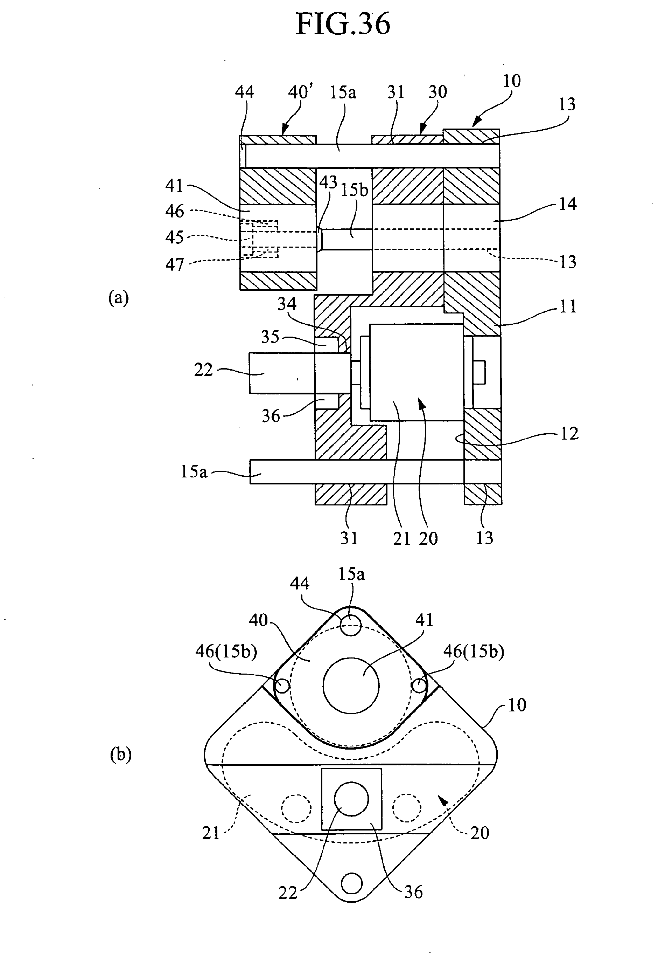

Figs. 36 ~ 38 show a thirteenth embodiment of the present invention. The present embodiment achieves the operational characteristics shown in Fig. 7, and uses a stepping motor as an actuator for moving the lens groups.

The basic structure is the same as that of the first embodiment, wherein the difference is that the front lens group is also made movable. Namely, as shown in Figs. 36 ~ 38, a flat rectangular base 10 is formed from a high step portion 11 which raises ¼ of the area of the front surface thereof including one corner by one step, and a low step portion 12 on the remaining area. Further, small diameter holes 13 are formed in three of the four corners of the high step portion 11, and a large diameter through hole 14 is formed in the middle. The center of the through hole 14 forms the optical axis, and although omitted from the drawings, an image taking element or the like such as a CCD or the like is arranged at a prescribed position behind the through hole 14.

Further, a miniature stepping motor 20 is provided on top of the low step portion 12. The stepping motor 20 has a case body 21 which is curved in the shape of a rough arc along the flat shape of the low step portion 12, and an output shaft 22 which protrudes to the outside is provided in the middle portion thereof. Although omitted from the drawings, a rotor is arranged in the middle inside the case body 21, and the output shaft 22 is inserted in the center of the rotor to form an integrated body. Further, a stator is arranged in both side portions extending left and right inside the case body 21. In this regard, the structure disclosed in Japanese Laid-Open Patent Application No. HEI 6-1055828 or Japanese Laid-Open Patent Application No. HEI 6-296358 can be used as a stepping motor having such structure. Of course, the stepping motor is not limited to such structures, and it goes without saying that it is possible to use various structures. Further, a screw thread is cut in the tip portion of the output shaft 22 to form a lead screw.

On the other hand, one end of a main guide pin 15a, sub guide pin 15b is inserted and fixed inside each of the holes 13 provided in the high step portion 11. Further, insertion is carried out so that a rear group movable body 30 can move with respect to both guide pins 15a, 15b. The rear group movable body 30 has a flat shape roughly the same as that of the base 10, has guide holes 31 which pass through at positions corresponding to the holes 13 of the base 10, and is provided with a through hole 32 at a position corresponding to the through hole 14 of the base 10. Further, both guide pins 15a, 15b are inserted and arranged inside the through hole 32, and in this way, the rear group movable body 30 which is supported by both the main guide pins 15a and the sub guide pins 15b can move forward and backward along each of the guide pins 15a, 15b in a stable posture. Further, a rear lens group (which includes the case of one lens) omitted from the drawings is mounted inside the through hole 32. Accordingly, the rear lens group moves forward and backward following the forward and backward movement of the rear group movable body 30. Further, in the state where the rear group movable body 30 is mounted on each of the guide pins 15a, 15b, the stepping motor 20 is in an inserted state between the base 10 and the rear group movable body 30.

Further, a through hole 34 is formed in the portion of the rear group movable body 30 corresponding to the output shaft 22 of the stepping motor 20, and a rectangular concave portion 35 is formed around the through hole 34 in the front side of the rear group movable body 30. Further, a lead nut 36 is inserted and fixed inside the concave portion 35. The lead nut 36 engages with the lead screw provided on the output shaft 22 of the stepping motor 20, whereby the lead nut 36 and the rear group movable body 30 move forward and backward following the positive and reverse rotations of the output shaft 22.

Furthermore, the main guide pins 15a are arranged to stand up even in the corner portions of the low step portion 12 of the base 10, and the tip portion of the main guide pin 15a attached to the top of the low step portion 12 is mounted so that movement is possible with respect to the rear group movable body 30.

On the other hand, a front group movable body 40' which supports the front lens group is mounted to the tips of each of the guide pins 15a, 15b provided on the high step portion 11. The front group movable body 40' is different from that of the first embodiment, and is set so as to be capable of movement over a prescribed distance in the axial direction. More specifically, the main guide pin 15a is inserted in a state through the inside of a hole 44 formed to have an inner diameter roughly the same as the outer diameter of the main guide pin 15a.

Further, circular stoppers 45 are attached to the tips of the sub guide pins 15b. The outer diameter of the stoppers 45 is made one size larger than the outer diameter of the sub guide pins 15b. Further, the sub guide pins 15b described above are inserted in holes 46 formed in prescribed positions of the front group movable body 40' to enable relative movement. As for the inner diameter of the holes 46, the rear portion roughly matches the outer diameter of the sub guide pins 15b, and the front portion is made one size larger than the outer diameter of the sub guide pins 15b so that it is possible to at least insert and arrange the stoppers 45. Further, springs 47 are mounted in a coaxial state at the tip side of the sub guide pins 15b. Both ends of the springs 47 make contact with the stoppers 45 and the inside surfaces of the holes 46 to bias the stoppers 45 and the inside surfaces apart.

In this way, because the positions of the stoppers 45 attached to the tips of the sub guide pins 15b do not change with respect to the base 10, the front group movable body 40' is biased backward and fixed in the state shown in Fig. 36 by the elastic restoring force of the springs 47. Further, as shown in Fig. 36, each dimension is set so that when the rear group movable body 30 moves forward and is in a state making contact with the base 10, the front group movable body 40' (front lens group) is positioned at the base position A, and the rear group movable body 30 (rear lens group) is positioned at the base position (1).

Further, spacers 43 are inserted and arranged on the sub guide pins 15b in a state fixed to the rear side of the front group movable body 40'. Of course, they do not necessarily need to be fixed to the front group movable body 40', and may be in a free state, or may be fixed at the rear group movable body 30 side. Further, the thickness of the spacers 43 is set so that the distance between the front lens group and the rear lens group in the state where the front group movable body 40' and the rear group movable body 30 are both touching the spacers 43 matches the distance d3 shown in Fig. 7, namely, the lens interval distance (C- (4)) which obtains a zoom magnification of γx.

Further, a through hole 41 is provided in the middle portion of the front group movable body 40', namely, at a position corresponding to the through holes 14, 32 provided in the base 10 and the rear group movable body 30, and the front lens group is inserted and arranged inside the through hole 41.

By forming such structure, when the output shaft 22 of the stepping motor 20 is rotated in reverse to move the rear group movable body 30 backward to a base posture in contact with the front surface of the base 10 as shown in Fig. 36(a), the zoom magnification can be set at 1x.

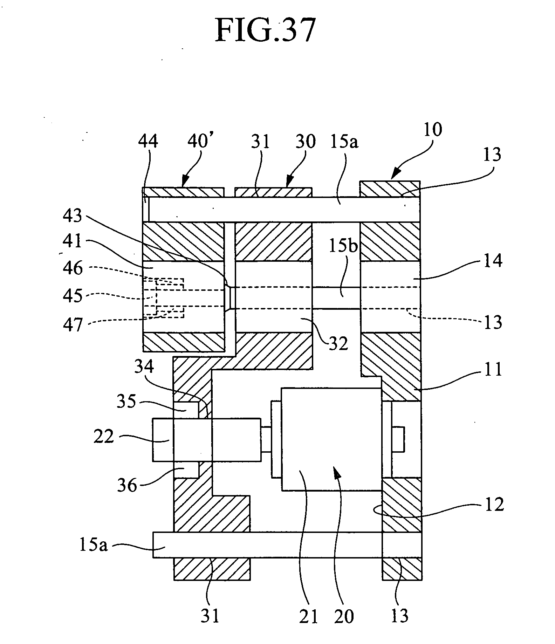

From this state, when the output shaft 22 of the stepping motor 20 is rotated in the positive direction to move the rear group movable body 30 forward to a prescribed position (a position where there is no contact with the front group movable body 40', or even when there is contact it is not biased forward) as shown in Fig. 37, the zoom magnification can be set at βx (e.g., 2x). Further, because the stepping motor 20 is used as an actuator, by controlling the number of steps, it is possible to control the position of the rear group movable body 30 with good accuracy.

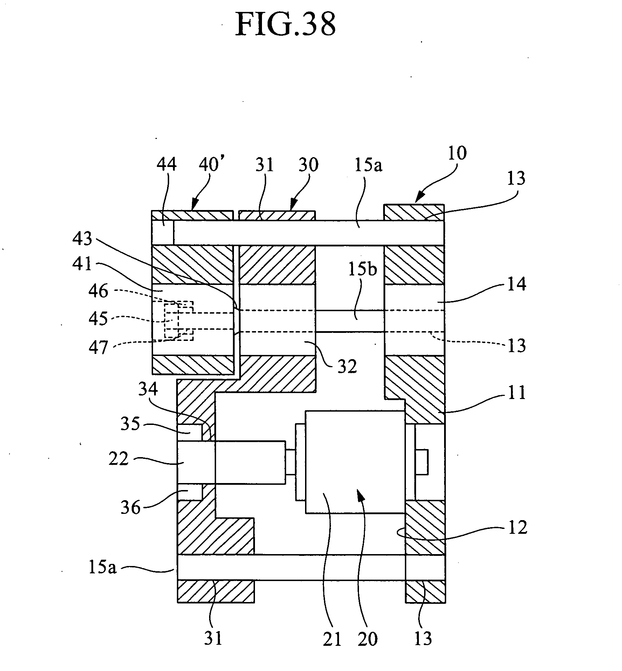

In this state, the stepping motor 20 is rotated further in the positive direction to move the rear movable body 30 further forward. When this is done, as shown in Fig. 38, the rear group movable body 30 pushes against the front group movable body 40' via the spacers 43, and this is pushed forward. In accordance with this, the front group movable body 40' and the rear group movable body 30 move forward together as one body. Further, the rotation of the stepping motor 20 is stopped at the time when the front group movable body 40' is positioned at the front position C (the rear group movable body 30 is at the front-most position (4)). In this way, the zoom magnification can be set at γx. Accordingly, in the present embodiment, it is possible to obtain the three values 1x → βx → γx.

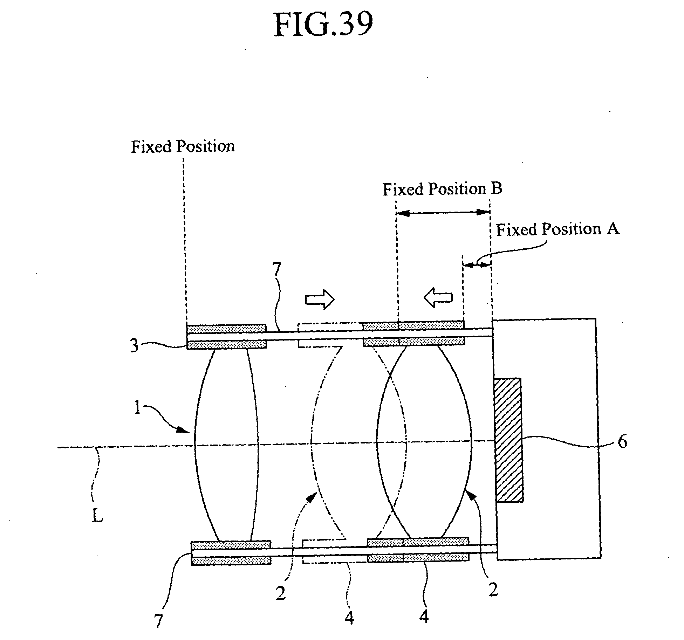

Fig. 39 shows a side view for explaining the concept in a fourteenth embodiment of the present invention. In each of the embodiments described above, optical zoom and focus were carried out, but in the present embodiment, macro is also carried out.

In the present embodiment, the lens drive apparatus is constructed so that the front lens group 1 and the rear lens group 2 are arranged in the front and rear of the optical axis L, the front lens group 1 is fixed at a fixed position, and the rear lens group 2 is moved in the optical axis direction by drive means described later.

The front and rear lens groups 1, 2 are constructed in the same way so that the lens groups are supported by being fitted inside annular frames 3, 4, and each lens group has a lens diameter of about 5 mm. Further, a plurality of guide pins 7, 7 is arranged along the optical axis L, and the front and rear frames 3, 4 which have holes provided in the outer circumference into which the guide pins 7, 7 are fitted are lined up in the optical axis direction.

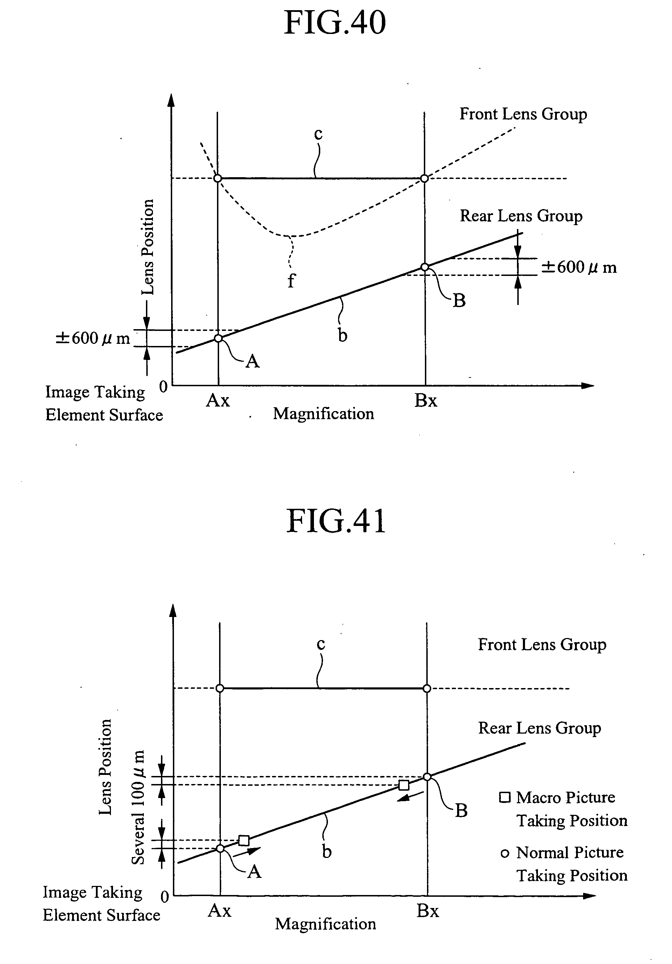

In order to function as a lens unit of an ultraminiature camera, an image taking element 6 such as a CCD or the like is arranged behind the rear lens group 2. Accordingly, at the light-receiving position of the image taking element 6, the magnification of the formed image changes in accordance with the positional relationship of the three optical elements lined up on the optical axis L, and the change in this zoom magnification generally has the characteristics shown in Fig. 40.

Namely, as for the general optical characteristics in the lens structure of the front and rear two groups, it is necessary to also move the front lens group 1 to obtain the proper zoom magnification from wide-angle (WIDE) to telescopic (TELE), and in this regard, driving needs to be carried out in which the rear lens group 2 is moved in a linear state (characteristic b) toward the side of the body being photographed, and the front lens group 1 is moved once toward the image taking element 6 side and then returns to the side of the body being photographed in a curved state (characteristic f).

However, in this arrangement, because it is not possible to carry out miniaturization when it becomes necessary to provide separate drive means to move the front lens group 1, in the present embodiment, the front lens group 1 is fixed, (characteristic c) at a fixed position, and only the rear lens group 2 is moved in the optical axis direction, wherein the rear lens group 2 is stopped at the two fixed positions A, B. In this way, the zoom magnification can be set at Ax at the fixed position A, and the zoom magnification can be set at Bx at the fixed position B, and this makes it possible to achieve a lens drive apparatus having two values of zoom magnification.

To give a specific example, in the case where the distance between the image taking element 6 and the front lens group 1 is fixed at 11.259 mm, the zoom magnification becomes 1x at the time when the distance from the image taking element 6 to the rear lens group 2 is 2.367 mm, and the zoom magnification becomes 2x at the time when such distance is 4.184 mm.

Further, in the present invention, driving is carried out so that the rear lens group 2 is moved a minute distance for each of the stopped fixed positions A, B. The minute movement at each of these fixed positions A, B is set so that movement is carried out at feed pitch intervals of 50 µm or less for a section of at least 600 µm forward and backward. These numerical values are different than the ideal values in accordance with the design values of the optical system, but they are confirmed by experiment. Specifically, as shown in Fig. 41, at the fixed position A at the side near the image taking element 6, a macro focal point having an objective distance of 5 cm is obtained by carrying out movement of about 300 µm toward the side of the body being photographed. At this time, the image forming magnification is changed to about A + 0.1x, but the macro operation is carried out by driving which moves a minute distance at such fixed position A. Further, at the fixed position B at the side near the front lens group 1, a macro focal point having an objective distance of 5 cm is obtained by carrying out movement of about several 100 µm toward the image taking element 6 side. At this time, the image forming magnification is changed to about B - 0.1x, but the macro operation is carried out by driving which moves a minute distance at such fixed position B.

Further, as confirmed by experiment, when the distance of minute movement at each of the fixed positions A, B is several 10 µm, this matches the position where the focal point is 30 cm, and when the distance is 10 µm, this matches the position where the focal point is 1 m.

Further, with regard to the driving of the rear lens group 2, the feed pitch of the minute movements is also set at several µm or less. In this way, by making the feed pitch smaller, it is possible to carry out focusing at such fixed positions, whereby the focus operation becomes easy.

Accordingly, even in a structure in which only the rear lens group 2 is driven by one actuator, a zoom operation having two values and a prescribed distance macro operation are carried out, and the focus operation is also easily carried out. Further, it is possible to use a stepping motor as an actuator to move the rear lens group 2 back and forth between the two fixed positions A, B.

A more specific structure for achieving the operation principle described above can be achieved by using the structure of the first embodiment shown in Fig. 8 and Fig. 9, and appropriately adjusting the control of the stepping motor used as a driving source. In this regard, the present embodiment will be described with appropriate use of Fig. 8 and Fig. 9. First, Fig. 8 is a perspective drawing showing each portion separately, Fig. 9(a) shows the state where the zoom magnification is Ax (base posture), and Fig. 9(b) is a perspective drawing showing the state where the zoom magnification is Bx. Further, because the mechanical structure is the same as the first embodiment, a description of the same portions is omitted.

In the present embodiment, spacers 43 are inserted and arranged on each guide pin 15. The thickness of the spacers 43 is adjusted. In the driving of the stepping motor 20, the movement position of the rear group movable body 30 can be positioned with good accuracy in accordance with the number of steps, the rear group movable body 30 is moved backward by rotating the output shaft 22 in the reverse direction and stopped at the fixed position A near the front surface of the base 10 as shown in Fig. 9(a), and with this forming the base posture, the zoom magnification is set at Ax. From this state, by rotating the output shaft 22 in the positive direction, the rear group movable body 30 is moved forward and stopped at the fixed position B near the spacers 43 as shown in Fig. 9(b), and here the zoom magnification is set at Bx.

Further, driving is carried out to move minute distances for each of the fixed positions A, B. In this regard, the stepping motor 20 is a two-phase type with 12 steps, for example, and by using a lead screw having a 0.5 mm pitch, it is possible to achieve a feed of approximately 42 µm per one step in two-phase magnetization, and the switching to macro operation is carried out by feeding several steps.

In the focus operation, the feed pitch needs to be made smaller, and when the stepping motor has 20 steps and uses a 0.25 µm pitch, for example, a feed of 12.5 µm is carried out per one step. Further, if 1-2 phase driving is carried out, because a feed of 6.25 µm is carried out per one step, the focus operation is carried out more accurately.

In this way, by driving the stepping motor 20, it is possible to move the rear group movable body 30, namely, the rear lens group to the fixed positions A, B, and minute movement is carried out at each of the fixed positions A, B. Accordingly, a zoom operation having two values and a prescribed distance macro operation are carried out by one actuator, and by making the feed pitch of the minute movements several µm or less, it is possible to carry out focusing at such fixed positions, and the focus operation is also easily carried out.

Further, in the lens drive apparatus having the structure described above, in one example of the dimensional shape, the base 10 is 11 mm square, the inner diameter of the through holes 32, 41, namely, the diameter of the rear lens group and the front lens group is 5 mm, and the height of the entire apparatus (the distance from the bottom surface of the base 10 to the front surface of the front group support body 40) is approximately 11 mm. In this way, it can be adequately installed in a portable telephone.

Further, when considering the dimensional shape of existing portable telephones, the surface area of the camera module forms a size less than 13 mm square even for fixed focusing. When this level is used as an upper limit, the lens drive apparatus can be made one size larger with a lens diameter up to about 7 mm, and this makes it possible to keep the total size (flat shape of the base 10) under 13 mm square. Of course, the use of a smaller lens does not interfere with the design of further overall miniaturization.

### INDUSTRIAL APPLICATION

As described above, in the lens drive apparatus according to the present invention, by limiting the stopping positions of the lens support members to a small number such as 1, 2 or 3 (limiting the zoom magnification), it is possible to carry out positioning by a simple mechanism without the need for a complex cam mechanism or highly accurate control or complex mechanisms, and this makes it possible to construct a simple miniature lens drive apparatus at low cost. For this reason, it becomes possible to install such apparatus as a lens drive apparatus corresponding to optical zoom in portable telephones and the like.

Further, in the lens drive apparatus according to the present invention, the front lens is fixed, and only the rear lens connected to drive means is moved and stopped at two fixed positions, and because there is movement over a minute distance at such fixed positions, a zoom operation having two values and a prescribed distance macro operation are carried out. Further, by making the feed pitch of the minute movements less than or equal to several µm, it is possible to carry out focusing at such fixed positions, and the focus operation is also easily carried out. As a result, the external shape can be ultraminiaturized, and this makes it possible to install the apparatus preferably in portable telephones which are becoming thinner and smaller scale.

## Claims

1. A lens drive apparatus for moving lenses in a lens unit having an optical zoom function for use in an ultraminiature camera which uses lenses having an optically effective lens diameter of 7 mm or less, comprising:
first and second lens support members arranged in the front and back;
wherein each of said first and second lens members holds a prescribed number of lenses;
said first lens support member is fixed;
said second lens support member is made movable in the forward and backward directions, and is constructed so as to stop at two prescribed positions in the forward and backward directions;
whereby it is possible to switch between two kinds of zoom magnification.

2. A lens drive apparatus for moving lenses in a lens unit having an optical zoom function for use in an ultraminiature camera which uses lenses having an optically effective lens diameter of 7 mm or less, comprising:
first and second lens support members arranged in the front and back;
wherein each of said first and second lens members holds a prescribed number of lenses;
said first lens support member is made movable in the forward and backward directions, and is constructed so as to stop at two prescribed positions in the forward and backward directions;
said second lens support member is made movable in the forward and backward directions, and is constructed so as to stop at two prescribed positions in the forward and backward directions;
whereby it is possible to switch between two kinds of zoom magnification by controlling the stopping positions of said first and second lens support members.

3. A lens drive apparatus for moving lenses in a lens unit having an optical zoom function for use in an ultraminiature camera which uses lenses having an optically effective lens diameter of 7 mm or less, comprising:
first and second lens support members arranged in the front and back;
wherein each of said first and second lens members holds a prescribed number of lenses;
said first lens support member is made movable in the forward and backward directions, and is constructed so as to stop at two prescribed positions in the forward and backward directions;
said second lens support member is made movable in the forward and backward directions, and is constructed so as to stop at three prescribed positions in the forward and backward directions;
whereby it is possible to switch between three kinds of zoom magnification by controlling the stopping positions of said first and second lens support members.

4. The lens drive apparatus described in any one of Claim 1 ~ Claim 3, wherein the movement of at least one of said first lens support member and said second lens support member is carried out based on the output of a stepping motor.

5. The lens drive apparatus described in Claim 1 or Claim 2, wherein at least one solenoid, relay or permanent magnet is used as an actuator to move said first lens support member and said second lens support member, whereby the switching of the two kinds of relative positional relationship can be controlled by moving the first and second lens support members in accordance with the output of the actuator.

6. The lens drive apparatus described in Claim 3, wherein said second lens support member receives the output of a stepping motor to move forward and backward, and said first lens support member is made movable by a biasing force from said second lens support member and is stopped at the two positions of a first position in the state when said biasing force is not received, and a second position when being moved by said biasing force.

7. A lens drive apparatus for moving lenses in a lens unit having an optical zoom function for use in an ultraminiature camera which uses lenses having an optically effective lens diameter of 7 mm or less, comprising:
first and second lens support members arranged in the front and back;
wherein each of said first and second lens members holds a prescribed number of lenses;
said first lens support member is fixed;
said second lens support member is made movable in the forward and backward directions, is constructed so as to stop at two fixed positions in the forward and backward directions, and is driven to move a minute distance at said fixed positions;
whereby it is possible to carry out operations which change optical zoom and focus.

8. The lens drive apparatus described in Claim 7, wherein the minute movement at said fixed positions carries out movement by a feed pitch less than or equal to 50 µm for at least a 600 µm section front and back.

9. The lens drive apparatus described in Claim 8, wherein the feed pitch of said minute movement is made less than or equal to several µm.

10. The lens drive apparatus described in any one of Claim 7 ~ Claim 9, wherein a stepping motor is used as a drive source in drive means for moving said second lens support member, a lead screw is provided on the output shaft of the stepping motor, a lead nut is provided at a corresponding position of said second lens support member, and a linear operation is carried out by connecting the lead screw and the lead nut.

11. The lens drive apparatus described in Claim 10, wherein said stepping motor is a flat type in which steps are arranged on the left and right of the rotor.
